# EUROPEAN PATENT APPLICATION

(11) **EP 2 221 612 A1**
(43) Date of publication of application: **25.08.2010**
(21) Application number: 08858009.7
(22) Date of filing: 04.12.2008
(51) Int. Cl.: G01N 27/327, G01N 27/416, H01M 4/90, H01M 8/16

(54) **ELECTRODE, AND ENZYME SENSOR, FUEL CELL, ELECTRONIC DEVICE AND POLYOL DEGRADATION METHOD USING THE ELECTRODE**

(30) Priority: 07.12.2007 JP 2007316759
(71) Applicant: Sony Corporation, Tokyo 108-0075 (JP); Amano Enzyme Inc., Nagoya-shi Aichi 460-8630 (JP)
(72) Inventor: TOKITA, Yuichi, Tokyo 108-0075 (JP); SAKAI, Hideki, Tokyo 108-0075 (JP); SUGIURA, Toshiyuki, Nagoya-shi Aichi 460-8630 (JP); GOTO, Chinatsu, Nagoya-shi Aichi 460-8630 (JP); TAKAHASHI, Tetsuya, Nagoya-shi Aichi 460-8630 (JP)
(74) Representative: Hart-Davis, Jason
(86) International application number: PCT/JP2008/072092
(87) International publication number: WO 2009/072580

(57) **Abstract**

An electrode that can generate reduced coenzymes from a desired substrate in multiple stages is provided. An electrode includes a 2-hydroxycarboxylic acid synthase, a 2-oxo acid synthase, and a 2-oxo acid carboxylyase. The electrode includes a 2-oxo acid carboxylyase, which is a decarboxylase, in addition to a 2-hydroxycarboxylic acid synthase and a 2-oxo acid synthase, which are oxidoreductases; therefore, oxidation products having carboxyl groups, reactions of which do not proceed with oxidoreductases, can be decarboxylated and modified into substances with which oxidoreductases can act. Thus, oxidation reactions and decarboxylation reactions can repeatedly proceed with respect to desired substrates, and large quantities of reduced coenzymes can be generated thereby.

## Description

### Technical Field

The present invention relates to electrodes, in particular, an electrode that includes an oxidoreductase and a decarboxylase, enzyme sensors and fuel batteries using the electrodes, electronic devices that use the enzyme sensors or fuel batteries, and methods for decomposing polyols.

### Background Art

In recent years, electrodes that use biological techniques have drawn attentions in the fields of fuel batteries, sensors, etc.

For example, regarding the respiration of microorganisms and cells, nicotinamide adenine dinucleotide (referred to as "NAD⁺" hereinafter) is reduced to be converted into electric energy such as reduced nicotinamide adenine dinucleotide (referred to as "NADH" hereinafter) in the process of generating carbon dioxide from sugars, proteins, and fats through a glycolytic pathway and a tricarboxylic acid cycle.

Moreover, in photosynthesis, when optical energy is absorbed, nicotinamide adenine dinucleotide phosphate (referred to as "NADP⁺" hereinafter) is reduced to be converted into electric energy such as reduced nicotinamide adenine dinucleotide phosphate (referred to as "NADPH" hereinafter).

As described above, since nutrients such as sugars, fats, protein, etc., and chemical energy such as optical energy are converted into electrical energy by biological metabolism, electrodes that can be used in batteries and sensors have been developed using this.

As an example of the foregoing, Japanese Unexamined Patent Application Publication No. 2000-133297 discloses a method for generating power and a battery using microorganisms and cells, and an electrode with immobilized electron mediators for use in these. However, since the biological metabolism also involves a variety of pathways other than respiration and photosynthesis, it has been difficult to efficiently use electrical energy.

Then, an electrode has been developed which utilizes an enzyme having a substrate specificity and can efficiently use electrical energy. In particular, development of an electrode that uses an oxidoreductase capable of efficiently using the oxidation-reduction reactions at the electrode is in progress.

For example, Japanese Unexamined Patent Application Publication No. 2001-208719 discloses an enzyme electrode including an oxidoreductase immobilized in or on a polydialkylsiloxane film provided on a substrate electrode, and Japanese Unexamined Patent Application Publication No. 2006-275923 discloses a biosensor having an electrode on which an oxidoreductase is applied.

In an oxidation reaction with an oxidoreductase, a reduced coenzyme is generated along with an oxidation product. When similar reactions are performed several stages by using the generated oxidation product as the substrate, reduced coenzymes corresponding to the number of reactions can be generated. However, when only oxidoreductases are combined, reactions for generating reduced coenzymes will proceed only about few steps.

For example, Japanese Unexamined Patent Application Publication No. 2004-71559 discloses a fuel battery that utilizes generation of NADH from alcohols and sugars by actions of a NAD⁺-dependent dehydrogenase. As illustrated in Fig. 3 of Japanese Unexamined Patent Application Publication No. 2004-71559, when ethanol is a substrate, acetic acid is generated through two stages of reactions due to actions of the NAD⁺-dependent dehydrogenase. However, acetic acid has a carboxyl group and cannot be oxidized with the NAD⁺-dependent dehydrogenase. Thus, in order to further extract electrons as NADH, a complicated reaction system in which a plurality of enzymatic reactions including equilibrium reactions such as a citric acid cycle and a pentose phosphate cycle are formed into a cycle is required to conduct complete decomposition to CO₂.

Moreover, in these multi-enzyme reactions, there is one or more equilibrium reactions (transfer reactions) that do not extract electrons as NADH, and a series of reactions are formed into a cycle. Thus, there has been a problem that the speed of extracting electrons tends to be low. There has also been a problem that when in vivo reactions such as these cycles are used, the substances that serve as fuels are also limited to in vivo materials associated with these reactions.

### Disclosure of Invention

In order to put enzyme sensors and fuel batteries that use enzyme-containing electrodes to practical applications, high output and high capacity are essential. In addition, in recent years, studies on improving the capacity as a battery by extracting more high-energy electrons from fuels by introducing multi-enzyme reactions using a glycolytic pathway, a citric acid cycle, a pentose phosphate cycle, a β-oxidation cycle, and the like achieved in vivo have been carried out. However, as mentioned above, these multi-enzyme reactions have had a problem that the speed of extracting electrons tends to be low and the substances that serve as fuels are limited to in-vivo materials associated with these reactions.

Accordingly, it is desirable to provide an electrode that can extract more electrons with higher energy and improve the speed of extracting electrons by generating reduced coenzymes from desired substrates (fuels) through multiple stages.

The inventors of the present application have conducted extensive investigations on reaction systems that can extract a large number of electrons as reduced coenzymes without using in-vivo multi-enzyme reactions such as those cycles described above. As a result, they have found a reaction system in which the number of equilibrium reactions (transfer reactions) that do not extract electrons as reduced coenzymes is decreased as much as possible and in which metabolic intermediates generated by metabolizing the substrates (fuels) are decomposed by sequential reactions of a dehydrogenase reaction and a decarboxylase reaction for extracting electrons as reduced coenzymes so as to improve the speed of extracting electrons.

An embodiment of the present invention first provides an electrode including a 2-hydroxycarboxylic acid synthase, a 2-oxo acid synthase, and a 2-oxo acid carboxylyase.
The electrode according to an embodiment of the present invention should include at least these three types of the enzymes but may further include a dihydroxyethyl group oxidase, a formate dehydrogenase, and the like.
The type of the 2-hydroxycarboxylic acid synthase is not particularly limited, but aldehyde dehydrogenases (E.C. 1.2.1.3 and E.C. 1.2.1.5), glycolaldehyde dehydrogenase (E.C. 1.2.1.21), or lactaldehyde dehydrogenase (E.C. 1.2.1.22) can be named as an example.
The type of the 2-oxo acid synthase is also not particularly limited, but lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.1.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93) can be named as an example.
The type of the 2-oxo acid carboxylyase is also not particularly limited, but pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.
The type of the dihydroxyethyl group oxidase is not particularly limited, but alcohol dehydrogenases (E.C. 1.1.1.1 and E.C. 1.1.1.71), mannitol 2-dehydrogenase (E.C. 1.1.1.67), glycerol dehydrogenase (E.C. 1.1.1.6), aldehyde reductase (E.C. 1.1.1.21), gluconate 5-dehydrogenase (E.C. 1.1.1.69), or glycol dehydrogenase (E.C. 1.1.1.185) can be named as an example.
The electrode according to an embodiment of the present invention can be suitably used in enzyme sensors and fuel batteries.
Moreover, the enzyme sensor or the fuel battery can be suitably used in electric devices.
An embodiment of the present invention also provides a method for decomposing a polyol, including a decomposition step I in which a 2-hydroxycarboxylic acid synthase functions as a catalyst; a decomposition step II in which a 2-oxo acid synthase functions as a catalyst; and a decomposition step III in which a 2-oxo acid carboxylyase functions as a catalyst.
The method for decomposing a polyol according to the embodiment of the present invention should at least include the three steps, I to III described above, but may further include a decomposition step IV in which a dihydroxyethyl group oxidase functions as a catalyst or a decomposition step V in which a formate dehydrogenase functions as a catalyst.
In the decomposition step I, decomposition of the polyol can proceed according to reaction formula (1) below:

[Chem. 1] R-CHOH-CHO → R-CHOH-COOH

(wherein R is a chain or cyclic compound, the same applies hereinafter).
In the decomposition step II, decomposition of the polyol can proceed according to reaction formula (2) and/or (3) below:

[Chem. 2] R-CHOH-COOH → R-CO-COOH

[Chem. 3] R-CO-CHO → R-CO-COOH

In the decomposition step III, decomposition of the polyol proceeds according to reaction formula (4) below:

[Chem. 4] R-CO-COOH → R-CHO + CO₂

In the decomposition step IV, decomposition of the polyol proceeds according to one of reaction formulae (5) to (7) below:

[Chem. 5] R-CHOH-CH₂OH → R-CO-CH₂OH

[Chem. 6] R-CHOH-CH₂OH → R-CHOH-CHO

[Chem. 7] R-CO-CH₂OH → R-CO-CHO

In the decomposition step V, decomposition of the polyol proceeds according to reaction formula (8) below:

[Chem. 8] HCOOH → CO₂

According to the method for decomposing a polyol according to an embodiment of the present invention, a desired oxidized coenzyme A may be reduced by electrons generated in at least one step selected from the decomposition steps I to V to generate a reduced coenzyme B.
The oxidized coenzyme A and the reduced coenzyme B are not particularly limited but NAD⁺ can be named as an example of the oxidized coenzyme A and NADH can be named as an example of the reduced coenzyme B.
Moreover, according to the method for decomposing a polyol according to an embodiment of the present invention, oxidation and/or reduction of an electron mediator can also be performed in the course of generating the reduced coenzyme B by reducing the oxidized coenzyme A with electrons and in the course of returning the reduced coenzyme into the oxidized coenzyme with a coenzyme oxidase.

Note that in this specification, "electronic device" includes all devices that operate electrically. For example, electronic devices such as cellular phones, mobile devices, robots, personal computers, game machines, car-mountable devices, home electric products, and industrial products, moving objects such as automobiles, two-wheel vehicles, airplanes, rockets, and space crafts, medical devices such as test equipment, power supplies for pacemakers, and power supplies for in-vivo devices including biosensors, and power generating systems and cogeneration systems such as a system for generating electric energy by decomposition of garbage can be named.

Moreover, "polyol compound" refers to a compound that has a plurality of hydroxyl groups as functional groups in a molecule. "A plurality" refers to at least 2, preferably 3 or more, more preferably 4 or more, and yet more preferably 5 or more. The greater the number of hydroxyl groups, the large the number of stages in which the oxidation-reduction reactions proceed; therefore, the amount of reduced coenzymes generated per one molecule of an initial substrate of the reaction is increased.

When the electrode according to an embodiment of the present invention is used, generation of reduced coenzymes is possible from a desired substrate through multiple stages. Brief Description of Drawings

[Fig. 1] Fig. 1 is a diagram showing steps of decomposing glucose using a method for decomposing a polyol according to an embodiment of the present invention.
[Fig. 2] Fig. 2 is a diagram showing steps of decomposing glycerol using a method for decomposing a polyol according to an embodiment of the present invention.
[Fig. 3] Fig. 3 is a diagram showing steps of decomposing ethylene glycol using a method for decomposing a polyol according to an embodiment of the present invention.
[Fig. 4] Fig. 4 is a diagram showing steps of decomposing ethylene glycol, glycerol, erythritol, xylitol, and sorbitol using a method for decomposing a polyol according to an embodiment of the present invention.
[Fig. 5] Fig. 5 is a diagram showing steps of decomposing a glycerol-based monosaccharide using a method for decomposing a polyol according to an embodiment of the present invention.
[Fig. 6] Fig. 6 is a diagram showing steps of decomposing a polyol compound using a method for decomposing a polyol according to an embodiment of the present invention.
[Fig. 7] Fig. 7 is a diagram showing the amount of NADH generated in a first reaction of glycerol decomposition in Example 1.
[Fig. 8] Fig. 8 is a diagram showing the amount of NADH generated in a second reaction of glycerol decomposition in Example 1.
[Fig. 9] Fig. 9 is a diagram showing the amount of NADH generated in a third reaction of glycerol decomposition in Example 1.
[Fig. 10] Fig. 10 is a diagram showing the amount of NADH generated in fourth to fifth reactions of glycerol decomposition in Example 1.
[Fig. 11] Fig. 11 is a diagram showing the amount of NADH, generated in a sixth reaction of glycerol decomposition in Example 1.
[Fig. 12] Fig. 12 is a diagram showing the amount of NADH generated in a seventh reaction of glycerol decomposition in Example 1.
[Fig. 13] Fig. 13 is a diagram showing the amount of NADH generated in eighth to ninth reactions of glycerol decomposition in Example 1.
[Fig. 14] Fig. 14 is a diagram showing the amount of NADH generated in a first reaction of ethylene glycol decomposition in Example 2.
[Fig. 15] Fig. 15 is a diagram showing the amount of NADH generated in a second reaction of ethylene glycol decomposition in Example 2.
[Fig. 16] Fig. 16 is a diagram showing the amount of NADH generated in a third reaction of ethylene glycol decomposition in Example 2.
[Fig. 17] Fig. 17 is a diagram showing the amount of NADH generated in a fourth reaction of ethylene glycol decomposition in Example 2.
[Fig. 18] Fig. 18 is a diagram showing the amount of NADH generated in fifth to sixth reactions of ethylene glycol decomposition in Example 2.
[Fig. 19] Fig. 19 is a schematic view of a prototype battery used in Example 4.
[Fig. 20] Fig. 20 is a diagram showing current values in first to second reactions of glucose decomposition steps in Example 4(1).
[Fig. 21] Fig. 21 is a diagram schematically showing the outline of a reaction on an electrode in Example 5.
[Fig. 22] Fig. 22 is a diagram showing current values in first to second reactions of glucose decomposition steps in Example 5.
[Fig. 23] Fig. 23 is a diagram showing current values in first to second reactions of glucose decomposition steps in Example 6.
[Fig. 24] Fig. 24 is a diagram showing current values versus potential in first to second reactions of glucose decomposition steps in Example 6.

### Best Modes for Carrying Out the Invention

Preferred embodiments for carrying out the present invention are described below with reference to the drawings. It should be understood that the embodiments described below are examples of representative embodiments of the present invention and the scope of the present invention is never interpreted narrowly by these.

### <Electrode>

An electrode according to an embodiment at least includes a 2-hydroxycarboxylic acid synthase, a 2-oxo acid synthase, and a 2-oxo acid carboxylyase. This electrode includes a 2-oxo acid carboxylyase, which is a decarboxylase, in addition to a 2-hydroxycarboxylic acid synthase and a 2-oxo acid synthase, which are oxidoreductases. Accordingly, oxidation products having carboxyl groups, reactions of which do not proceed with oxidoreductases, can be decarboxylated and modified into substances with which oxidoreductases can act. Thus, when the electrode of this embodiment is used, oxidation reactions and decarboxylation reactions can be repeatedly proceeded with respect to desired substrates; hence, large quantities of reduced coenzymes can be generated.

The electrode according to this embodiment is not particularly limited in terms of other structures and the like as long as the three types of enzymes are at least included. For example, a structure of immobilizing the three types of enzymes described above on a conductive base member by a known method may be employed. However, in one embodiment of the present invention, immobilization of enzymes is not essential.

The conductive base member is not particularly limited as long as it is a material that can electrically connect to the outside; for example, metals such as Pt, Ag, Au, Ru, Rh, Os, Nb, Mo, In, Ir, Zn, Mn, Fe, Co, Ti, V, Cr, Pd, Re, Ta, W, Zr, Ge, and Hf, alloys such as alumel, brass, duralumin, bronze, nickelin, platinum-rhodium, hyperco, permalloy, permendur, nickel silver, and phosphor bronze, conductive polymers such as polyacetylenes; carbon materials such as graphite and carbon black, borides such as HfB2, NbB, CrB2, and B4C; nitrides such as TiN and ZrN, silicides such as VSi2, NbSi2, MoSi2, and TaSi2, and mixtures of these may be used. A porous conductive material that contains a backbone composed of a porous material and a material containing a carbon-based material as the main material covering at least part of the backbone may also be used.

The electrode according to the this embodiment should at least include the three types of enzymes but more preferably further includes a dihydroxyethyl group oxidase or a formate dehydrogenase.

The type of the 2-hydroxycarboxylic acid synthase is not particularly limited as long as it is an enzyme that can catalyze a reaction of generating 2-hydroxycarboxylic acid by oxidation. Aldehyde dehydrogenases (E.C. 1.2.1.3 and E.C. 1.2.1.5), glycolaldehyde dehydrogenase (E.C. 1.2.1.21), or lactaldehyde dehydrogenase (E.C. 1.2.1.22) can be named as an example.

The type of the 2-oxo acid synthase is not particularly limited as long as it is an enzyme that can catalyze a reaction of generating 2-oxo acid by oxidation. Lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.1.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93) can be named as an example.

The type of the 2-oxo acid carboxylyase is not particularly limited as long as it is an enzyme that can catalyze a decarboxylation reaction of a compound having a carboxyl group. Pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.

The type of the dihydroxyethyl group oxidase is not particularly limited as long as it is an enzyme that can catalyze an oxidation reaction of a compound having a dihydroxyethyl group. Alcohol dehydrogenases (E.C. 1.1.1.1 and E.C. 1.1.1.71), mannitol 2-dehydrogenase (E.C. 1.1.1.67), glycerol dehydrogenase (E.C. 1.1.1.6), aldehyde reductase (E.C. 1.1.1.21), gluconate 5-dehydrogenase (E.C. 1.1.1.69), or glycol dehydrogenase (E.C. 1.1.1.185) can be named as an example.

The electrode according to this embodiment may include, in addition to the enzymes described above, an oxidized coenzyme and a coenzyme oxidase. As the oxidized coenzyme, for example, nicotinamide adenine dinucleotide (referred to as "NAD⁺" hereinafter), nicotinamide adenine dinucleotide phosphate (referred to as "NADP⁺" hereinafter), flavin adenine dinucleotide (referred to as "FAD⁺" hereinafter), pyrrollo-quinoline quinone (referred to as "PQQ2+" hereinafter), etc., can be named. As the coenzyme oxidase, for example, diaphorase (DI) can be named.

According to this electrode, the oxidation-reduction reactions are repeated in which the oxidized coenzymes described above are reduced to their respective reduced forms, NADH, NADPH, FADH, and PQQH₂, with oxidation decomposition of substrates (fuels) and, conversely, the reduced coenzymes are returned to oxidized coenzymes by the coenzyme oxidases. Two electrons are generated when the reduced coenzymes return to oxidized coenzymes.

Furthermore, the electrode according to this embodiment may include, in addition to the enzymes, the oxidized coenzyme, and the coenzyme oxidase described above, an electron mediator. This is to smoothen the donating of the electrons generated as described above to the electrode. As the electron mediator, for example, 2-amino-3-carboxy-1,4-naphthoquinone (ACNQ), vitamin K3, 2-amino-1,4-naphthoquinone (ANQ), 2-amino-3-methyl-1,4-naphthoquinone (AMNQ), 2,3-diamino-1,4-naphthoquinone, metal complexes of osmium (Os), ruthenium (Ru), iron (Fe), cobalt (Co), and the like, a viologen compound such as benzyl viologen, a compound having a quinone backbone, a compound having a nicotinamide structure, a compound having a riboflavin structure, a compound having a nucleotide-phosphoric acid structure, and the like can be named.

This electrode is suited for use in all types of known enzyme sensors. The structure, functions, and the like are not particularly limited as long as the enzyme sensors can at least use this electrode.

This electrode, moreover, can be used in all types of known fuel batteries. The type of fuel, structure, functions, and the like are not particularly limited as long as the fuel batteries can at least use the enzyme electrode.

Since the oxidation reaction and decarboxylation reaction can be repeatedly proceeded with respect to desired substrates, the electrode according to this embodiment can thereby generate large quantities of reduced coenzymes. Thus, when used in enzyme sensors and fuel batteries, larger current values and electric capacities can be obtained compared to known products.

Since large current values and electric capacities are obtained, enzyme sensors and fuel batteries are suited for use in all types of known electronic devices. The structure, function, and the like are not particularly limited as long as the electric devices can use enzyme sensors and fuel batteries and all devices that operate electrically are included. For example, electronic devices such as cellular phones, mobile devices, robots, personal computers, game machines, car-mountable devices, home electric products, and industrial products, moving objects such as automobiles, two-wheel vehicles, airplanes, rockets, and space crafts, medical devices such as test equipment, power supplies for pacemakers, and power supplies for in-vivo devices including biosensors, and power generating systems and cogeneration systems such as a system for generating electric energy by decomposition of garbage can be named.

### <Method for decomposing polyol>

A method for decomposing a polyol according to this embodiment at least includes a decomposition step I in which a 2-hydroxycarboxylic acid synthase functions as a catalyst, a decomposition step II in which a 2-oxo acid carboxylyase functions as a catalyst, and a decomposition step III in which a 2-oxo acid carboxylyase functions as a catalyst. According to this method for decomposing a polyol, the decomposition step III in which a 2-oxo acid carboxylyase, which is a decarboxylase, functions as a catalyst proceeds in addition to the decomposition steps I and II in which 2-hydroxycarboxylic acid synthase and 2-oxo acid synthase, which are oxidoreductases, function as catalysts. Thus, the oxidation products having carboxyl groups, reactions of which do not proceed with oxidoreductases, can be decarboxylated and modified into substances with which oxidoreductases can act. As such, when this method for decomposing a polyol is used, oxidation reactions and decarboxylation reactions can be repeatedly proceeded in decomposition of desired polyol compounds; hence, large quantities of reduced coenzymes can be generated.

As for polyol compounds that can be decomposed by the method for decomposing a polyol, all types of known polyols can be decomposed as long as hydroxyl groups are contained. For example, proteins, fatty acids, sugars, and other compounds can be used. Among these, sugars are particularly preferable from the viewpoints of ease of procurement from food, food residue, fermentation products, or biomass, cost, versatility, safety, ease of handling, and the like.

Here, in this specification, "sugars" include aldehydes of polyalcohols, ketones, acids, polyalcohols themselves, derivative of these, condensates of these, etc.

Sugars that are suited for decomposition by this method for decomposing a polyol include polysaccharides, oligosaccharides, disaccharides, monosaccharides, and glycolipids and can be represented by chemical formula 9 or chemical formula 10 below. More preferably oligosaccharides and yet more preferably monosaccharides can be used.

[Chem. 9] CₙH₂ₙOₙ

[Chem. 10] CₙH₂ₙ+₂Oₙ

Glucose (n = 6), xylose (n = 5), galactose (n = 6), mannose (n = 6), and the like can be named as examples of the monosaccharides represented by chemical formula 9. Those represented by general formula of chemical formula 11 below can be named as examples of the monosaccharides represented by chemical formula 10; specifically, ethylene glycol (R = H), glycerol (R = CH₂OH), erythritol (R = CH(OH)CH₂OH), xylitol (R = CH(OH)CH(OH)CH₂OH), sorbitol (R = CH(OH)CH(OH)CH(OH) (CH₂OH)), and the like can be named.

[Chem. 11] R-CHOH-CH₂OH (R: (CHOH)ₙ-CH₂- or H)

The method for decomposing a polyol is described below by using specific examples. Gluconic acid-based monosaccharides represented by chemical formula 9 and glycerol-based monosaccharides represented by chemical formula 10 are used as examples in the description. Note that although monosaccharides are described as examples of sugars, polysaccharides, proteins, fatty acids, and the like can be decomposed by this method for decomposing a polyol.

Furthermore, although "NAD⁺" is described as an example of an oxidized coenzyme used in oxidation-reduction reactions in the method for decomposing a polyol, the oxidized coenzyme is not limited to this. For example, NADP⁺, flavin adenine dinucleotide (referred to as "FAD⁺" hereinafter), and pyrrollo-quinoline quinone (referred to as "PQQ²⁺" hereinafter) can be named. These oxidized coenzymes are respectively converted into their reduced forms, NADH, NADPH, FADH, and PQQH² and the like in the oxidation-reduction reactions. In the method for decomposing a polyol of this embodiment, NAD⁺ or NADP⁺ is more preferably used.

### (1) «Decomposition of gluconic acid-based monosaccharides «decomposition of glucose»

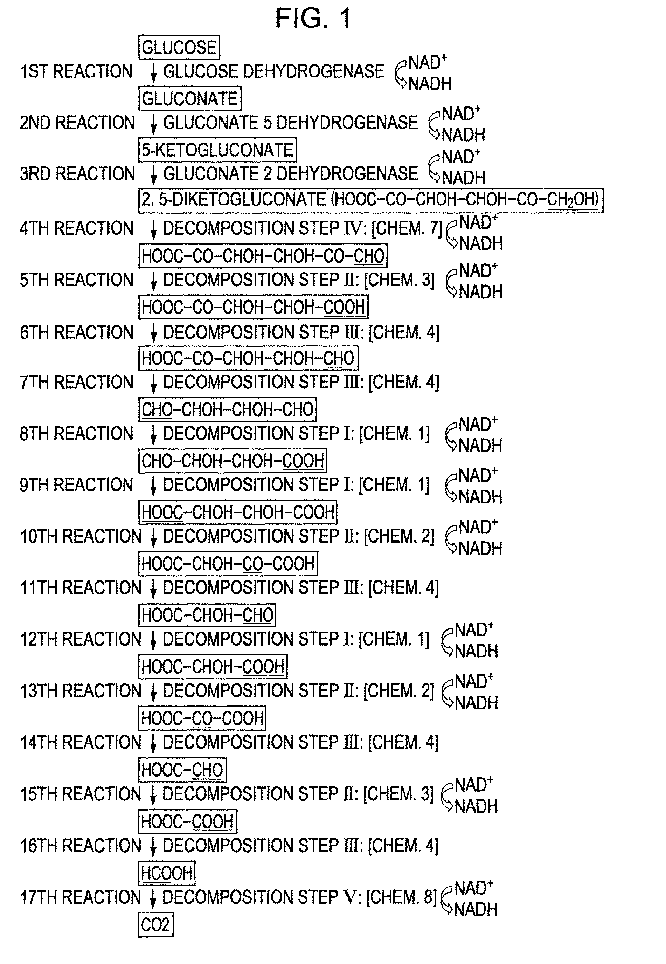

First, glucose is used as a specific example of a gluconic acid-based monosaccharide to describe the method for decomposing a polyol. Fig. 1 illustrates decomposition steps using this method for decomposing a polyol. Decomposition of glucose includes 17 stages of reactions as illustrated in Fig. 1.

A first reaction is a reaction of oxidizing glucose by an oxidation-reduction reaction with an oxidoreductase to generate gluconate. As a result, NADH is generated from NAD⁺. A glucose decarboxylase, a glucose oxidase, or an enzyme that reacts in a similar manner to these can be used as the oxidoreductase.

In a second reaction, gluconate is oxidized by an oxidation-reduction reaction with an oxidoreductase, thereby giving 5-ketogluconate. As a result, NADH is generated from NAD⁺. Gluconate-5-decarboxylase or an enzyme that reacts in a similar manner to this can be used as the oxidoreductase.

In a third reaction, 5-ketogluconate is oxidized by an oxidation-reduction reaction with an oxidoreductase, thereby giving 2-,5-diketogluconate. As a result, NADH is generated from NAD⁺. Gluconate-2-decarboxylase or an enzyme that reacts in a similar manner to this can be used as the oxidoreductase. The order in which the second reaction and the third reaction proceed may be reversed in some cases.

In a fourth reaction, 2,5-diketogluconic acid is oxidized by an oxidation-reduction reaction, thereby giving HOOC-CO-CHOH-CHOH-CO-CHO, and as a result, NADH is generated from NAD⁺. The fourth reaction corresponds to decomposition step IV in which a dihydroxyethyl group oxidase functions as a catalyst and a reaction of reaction formula 7 below proceeds.

[Chem. 7] R-CO-CH₂OH → R-GO-GHO

The type of the dihydroxyethyl group oxidase is not particularly limited as long as it is an enzyme that can catalyze an oxidation reaction of a compound having a dihydroxyethyl group. Alcohol dehydrogenases (E.C. 1.1.1.1 and E.C. 1.1.1.71), mannitol 2-dehydrogenase (E.C. 1.1.1.67), glycerol dehydrogenase (E.C. 1.1.1.6), aldehyde reductase (E.C. 1.1.1.21), gluconate 5-dehydrogenase (E.C. 1.1.1.69), or glycol dehydrogenase (E.C. 1.1.1.185) can be named as an example.

In a fifth reaction, HOOC-CO-CHOH-CHOH-CO-CHO is oxidized by an oxidation-reduction reaction, thereby giving HOOC-CO-CHOH-CHOH-CO-COOH, and as a result, NADH is generated from NAD⁺. The fifth reaction corresponds to decomposition step II in which a 2-oxo acid synthase functions as a catalyst and a reaction of reaction formula 3 below proceeds.

[Chem. 3] R-CO-CHO → R-CO-COOH

The type of the 2-oxo acid synthase is not particularly limited as long as it is an enzyme that can catalyze a reaction of generating 2-oxo acid by oxidation. Lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.1.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93) can be named as an example.

In a sixth reaction, HOOC-CO-CHOH-CHOH-CO-COOH is decarboxylated by a decarboxylation reaction, thereby giving HOOC-CO-CHOH-CHOH-CHO, and, as a result, carbon dioxide is generated. The sixth reaction corresponds to decomposition step III in which a 2-oxo acid carboxylyase functions as a catalyst and a reaction of reaction formula 4 below proceeds.

[Chem. 4] R-CO-COOH → R-CHO + CO₂

It should be noted that according to a conventional method that uses only an oxidoreductase, since a compound having a carboxyl group with which the oxidoreductase cannot act is generated in the fifth reaction, decomposition stops at the fifth reaction. However, according to this method of decomposing a polyol, since the 2-oxo acid carboxylyase which is a decarboxylase is used, decomposition from a sixth reaction onwards can proceed stepwise.

The type of the 2-oxo acid carboxylyase is not particularly limited as long as it is an enzyme that can catalyze the decarboxylation reaction of a compound having a carboxyl group. Pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.

In a seventh reaction, HOOC-CO-CHOH-CHOH-CHO is decarboxylated by a decarboxylation reaction, thereby giving CHO-CHOH-CHOH-CHO, and carbon dioxide is generated as a result. Like the sixth reaction, the seventh reaction corresponds to decomposition step III in which a 2-oxo acid carboxylyase functions as a catalyst and a reaction of reaction formula 4 above proceeds.

As with the sixth reaction, the type of the 2-oxo acid carboxylyase is not particularly limited as long as it is an enzyme that can catalyze the decarboxylation reaction of a compound having a carboxyl group. Pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.

In an eighth reaction, CHO-CHOH-CHOH-CHO is oxidized by an oxidation-reduction reaction, thereby giving CHO-CHOH-CHOH-COOH, and as a result, NADH is generated from NAD⁺. This eighth reaction corresponds to decomposition step I in which a 2-hydroxycarboxylic acid synthase functions as a catalyst and a reaction of reaction formula 1 proceeds.

[Chem. 1] R-CHOH-CHO → R-CHOH-COOH

The type of the 2-hydroxycarboxylic acid synthase is not particularly limited as long as it is an enzyme that can catalyze a reaction of generating 2-hydroxydicarboxylic acid by oxidation. Aldehyde dehydrogenases (E.C. 1.2.1.3 and E.C. 1.2.1.5), glycolaldehyde dehydrogenase (E.C. 1.2.1.21), or lactaldehyde dehydrogenase (E.C. 1.2.1.22) can be named as an example.

In a ninth reaction, CHO-CHOH-CHOH-COOH is oxidized by an oxidation-reduction reaction, thereby giving HOOC-CHOH-CHOH-COOH, and as a result, NADH is generated from NAD⁺. Like the eighth reaction, this ninth reaction corresponds to decomposition step I in which a 2-hydroxycarboxylic acid synthase functions as a catalyst and a reaction of reaction formula 1 above proceeds.

As with the eighth reaction, the type of the 2-hydroxycarboxylic acid synthase is not particularly limited as long as it is an enzyme that can catalyze a reaction of generating 2-hydroxycarboxylic acid by oxidation. Aldehyde dehydrogenases (E.C. 1.2.1.3 and E.C. 1.2.1.5), glycolaldehyde dehydrogenase (E.C. 1.2.1.21), or lactaldehyde dehydrogenase (E.C. 1.2.1.22) can be named as an example.

In a tenth reaction, HOOC-CHOH-CHOH-COOH is oxidized by an oxidation-reduction reaction, thereby giving HOOC-CHOH-CO-COOH, and as a result, NADH is generated from NAD⁺. This tenth reaction corresponds to decomposition step II in which a 2-oxo acid synthase functions as a catalyst and a reaction of reaction formula 2 below proceeds.

[Chem. 2] R-CHOH-COOH → R-CO-COOH

As with the fifth reaction, the type of the 2-oxo acid synthase is not particularly limited as long as it is an enzyme that can catalyze a reaction of generating 2-oxo acid by oxidation. Lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.1.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93) can be named as an example.

In an eleventh reaction, HOOC-CHOH-CO-COOH is decarboxylated by a decarboxylation reaction, thereby giving HOOC-CHOH-CHO, and as a result, carbon dioxide is generated. Like the sixth and seventh reactions, the eleventh reaction corresponds to decomposition step III in which a 2-oxo acid carboxylyase function as a catalyst and a reaction of reaction formula 4 above proceeds.

As with the sixth and seventh reactions, the type of the 2-oxo acid carboxylyase is not particularly limited as long as it is an enzyme that can catalyze the decarboxylation reaction of a compound having a carboxyl group. Pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.

In a twelfth reaction, HOOC-CHOH-CHO is oxidized by an oxidation-reduction reaction, thereby giving HOOC-CHOH-COOH and as a result, NADH is generated from NAD⁺. Like the eighth and ninth reactions, this twelfth reaction corresponds to decomposition step I in which a 2-hydroxycarboxylic acid synthase functions as a catalyst and a reaction of reaction formula 1 above proceeds.

As with the eighth and ninth reactions, the type of the 2-hydroxycarboxylic acid synthase is not particularly limited as long as it is an enzyme that can catalyze a reaction of generating 2-hydroxycarboxylic acid by oxidation. Aldehyde dehydrogenases (E.C. 1.2.1.3 and E.C. 1.2.1.5), glycolaldehyde dehydrogenase (E.C. 1.2.1.21), or lactaldehyde dehydrogenase (E.C. 1.2.1.22) can be named as an example.

In a thirteenth reaction, HOOC-CHOH-COOH is oxidized by an oxidation-reduction reaction, thereby giving HOOC-CO-COOH, and as a result, NADH is generated from NAD⁺. Like the tenth reaction, the thirteenth reaction corresponds to decomposition step II in which a 2-oxo acid synthase functions as a catalyst and a reaction of reaction formula 2 above proceeds.

As with the fifth and tenth reactions, the type of the 2-oxo acid synthase is not particularly limited as long as it is an enzyme that can catalyze a reaction of generating 2-oxo acid by oxidation. Lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.2.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93) can be named as an example.

In a fourteenth reaction, HOOC-CO-COOH is decarboxylated by a decarboxylation reaction, thereby giving HOOC-CHO, and carbon dioxide is generated as a result. Like the sixth, seventh, and eleventh reactions, the fourteenth reaction corresponds to decomposition step III in which a 2-oxo acid carboxylyase functions as a catalyst and a reaction of reaction formula 4 above proceeds.

As with the sixth, seventh, and eleventh reactions, the type of the 2-oxo acid carboxylyase is not particularly limited as long as it is an enzyme that can catalyze the decarboxylation reaction of a compound having a carboxyl group. Pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.

In a fifteenth reaction, HOOC-CHO is oxidized by an oxidation-reduction reaction, thereby giving HOOC-COOH, and as a result, NADH is generated from NAD⁺. Like the fifth reaction, this fifteenth reaction corresponds to decomposition step II in which a 2-oxo acid synthase functions as a catalyst and a reaction of reaction formula 3 proceeds.

As with the fifth, tenth, and thirteenth reaction, the type of the 2-oxo acid synthase is not particularly limited as long as it is an enzyme that can catalyze a reaction of generating 2-oxo acid by oxidation. Lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.1.19), phenylalanine dehydrogenase (E.C. 1.4.1.20), aspartate dehydrogenase (E.C. 1.4.1.22), 2-oxoaldehyde dehydrogenase (E.C. 1.2.1.23), malate dehydrogenase (E.C. 1.1.1.83), or tartrate dehydrogenase (E.C. 1.1.1.93) can be named as an example.

In a sixteenth reaction, HOOC-COOH is decarboxylated by a decarboxylation reaction, thereby giving HCOOH, and as a result, carbon dioxide is generated. Like the sixth, seventh, eleventh, and fourteenth reactions, the sixteenth reaction corresponds to decomposition step III in which a 2-oxo acid carboxylyase functions as a catalyst and a reaction of reaction formula 4 above proceeds.

As with the sixth, seventh, eleventh, and fourteenth reactions, the type of the 2-oxo acid carboxylyase is not particularly limited as long as it is an enzyme that can catalyze the decarboxylation reaction of a compound having a carboxyl group. Pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.

In a seventeenth reaction, HCOOH is oxidized by an oxidation-reduction reaction, thereby giving carbon dioxide, and as a result, NADH is generated from NAD⁺. This seventeenth reaction corresponds to decomposition step V in which a formate dehydrogenase functions as a catalyst and a reaction of reaction formula 8 below proceeds.

[Chem. 8] HCOOH → CO₂

In the seventeenth reaction, other than the formate dehydrogenase, enzymes that react in a similar manner can be used.

As described above, in decomposition of glucose using the method for decomposing a polyol, decomposition step I in which a 2-hydroxycarboxylic acid synthase functions as a catalyst, decomposition step II in which a 2-oxo acid synthase functions as a catalyst, and decomposition step III in which a 2-oxo acid carboxylyase functions as a catalyst are repeated in a random order.

In the course of decomposing glucose down to carbon dioxide, a total of seventeen stages of reactions occur and NADH is generated in twelve of these reactions. In other words, twelve molecules of NADH, are generates from one molecule of glucose. In contrast, according to a conventional method for decomposing a polyol using only an oxidoreductase, the reactions proceed only up to the fifth reaction, and thus only five molecules of NADH are generated from one glucose molecule. Therefore, when this method for decomposing a polyol is used, large quantities of NADH can be generated compared to the conventional method for decomposing a polyol.

### (2) Decomposition of glycerol-based monosaccharides

### «decomposition of glycerol (CH₂OH-CHOH-CH₂OH) >>

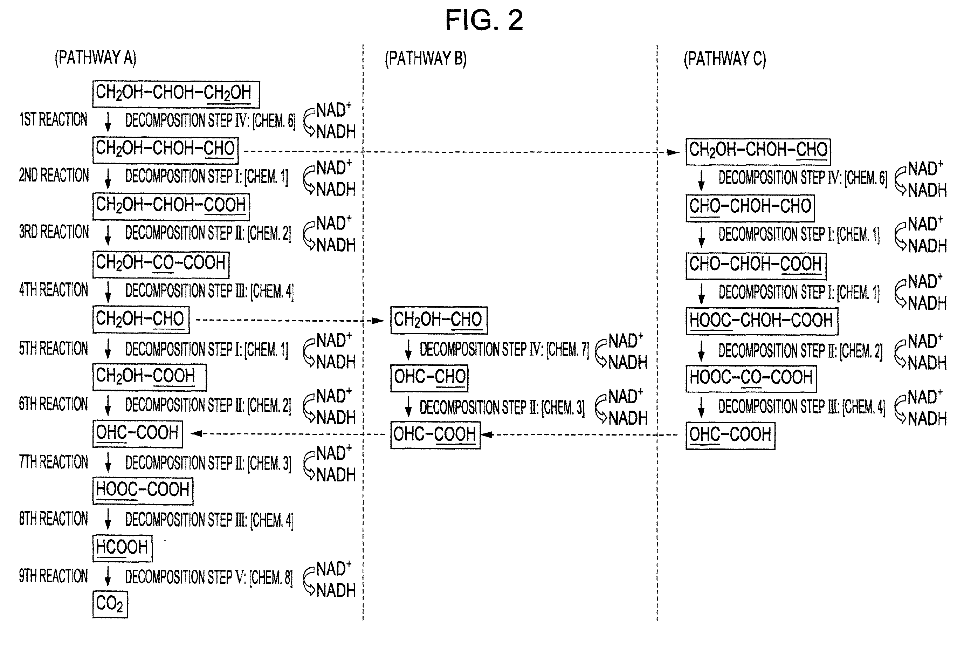

Glycerol (CH₂OH-CHOH-CH₂OH) is used as a specific example of a glycerol-based monosaccharide to describe the method for decomposing a polyol of this embodiment. Fig. 2 illustrates decomposition steps using a method for decomposing a polyol, which is a different embodiment from one illustrated in Fig. 1.

Decomposition of glycerol includes nine stages of reactions as shown in Fig. 2. However, depending on the selectivity of the oxidoreductase relative to a hydroxyl group or an aldehyde group, the reaction pathway may vary (refer to pathways A, B, and C in Fig. 2). However, in which pathway the reactions proceed does not make a significant difference since a substrate can be decomposed by the same enzymes and reduced coenzymes can be generated but in different order of enzyme reactions. Here, pathway A is described an example.

In a first reaction, glycerol (CH₂OH-CHOH-CH₂OH) is oxidized by an oxidation-reduction reaction, thereby giving glyceroaldehyde (CH₂OH-CHOH-CHO), and as a result, NADH is generated from NAD⁺. The first reaction corresponds to decomposition step IV in which a dihydroxyethyl group oxidase functions as a catalyst and a reaction of reaction formula 6 below proceeds.

[Chem. 6] **R-CHOH-CH₂**OH → R-CHOH-CHO

The type of the dihydroxyethyl group oxidase is not particularly limited as long as it is an enzyme that can catalyze an oxidation reaction of a compound having a dihydroxyethyl group. Alcohol dehydrogenases (E.C. 1.1.1.1 and E.C. 1.1.1.71), mannitol 2-dehydrogenase (E.C. 1.1.1.67), glycerol dehydrogenase (E.C. 1.1.1.6), aldehyde reductase (E.C. 1.1.1.21), gluconate 5-dehydrogenase (E.C. 1.1.1.69), or glycol dehydrogenase(E.C. 1.1.1.185) can be named as an example.

In a second reaction, glyceroaldehyde (CH₂OH-CHOH-CHO) is oxidized by an oxidation-reduction reaction, thereby giving glycerate (CH₂OH-CHOH-COOH), and as a result, NADH is generated from NAD⁺. The second reaction corresponds to decomposition step I in which a 2-hydroxycarboxylic acid synthase functions as a catalyst and a reaction of reaction formula 1 below proceeds.

[Chem. 1] **R-CHOH-CHO → R-CHOH-COOH**

The type of the 2-hydroxycarboxylic acid synthase is not particularly limited as long as it is an enzyme that can catalyze a reaction of generating 2-hydroxycarboxylic acid. Aldehyde dehydrogenases (E.C. 1.2.1.3 and E.C. 1.2.1.5), glycolaldehyde dehydrogenase (E.C. 1.2.1.21), or lactaldehyde dehydrogenase (E.C. 1.2.1.22) can be named as an example.

In a third reaction, glycerate (CH₂OH-CHOH-COOH) is oxidized by an oxidation-reduction reaction, thereby giving hydroxypyruvate (CH₂OH-CO-COOH), and as a result, NADH is generated from NAD⁺. This third reaction corresponds to decomposition step II in which a 2-oxo acid synthase functions as a catalyst and a reaction of reaction formula 2 below proceeds.

[Chem. 2] **R-CHOH-COOH → R-CO-COOH**

The type of the 2-oxo acid synthase is not particularly limited as long as it is an enzyme that can catalyze a reaction of generating 2-oxo acid by oxidation. Lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenase (E.C. 1.4.1.2, E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.1.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93) can be named as an example.

In a fourth reaction, hydroxypyruvate (CH₂OH-CO-COOH) is decarboxylated by a decarboxylation reaction, thereby giving glycoaldehyde (CH₂OH-CHO), and, as a result, carbon dioxide is generated. The fourth reaction corresponds to decomposition step III in which a 2-oxo acid carboxylyase functions as a catalyst and a reaction of reaction formula 4 below proceeds.

[Chem. 4] **R-CO-COOH → R-CHO** + **CO₂**

It should be noted that according to a conventional method that uses only an oxidoreductase, since a compound having a carboxyl group with which the oxidoreductase cannot act is generated in the third reaction, decomposition stops at the third reaction. However, according to this method of decomposing a polyol, since the 2-oxo acid carboxylyase which is a decarboxylase is used, decomposition from a fourth reaction onwards can proceed stepwise.

The type of the 2-oxo acid carboxylyase is not particularly limited as long as it is an enzyme that can catalyze the decarboxylation reaction of a compound having a carboxyl group. Pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.

In a fifth reaction, glycoaldehyde (CH₂OH-CHO) is oxidized by an oxidation-reduction reaction, thereby giving glycolate (CH₂OH-COOH), and as a result NADH is generated from NAD⁺. Like the second reaction, the fifth reaction corresponds to decomposition step I in which a 2-hydroxycarboxylic acid synthase functions as a catalyst and a reaction of reaction formula 1 above proceeds.

As with the second reaction, the type of the 2-hydroxycarboxylic acid synthase is not particularly limited as long as it is an enzyme that can catalyze a reaction of generating 2-hydroxycarboxylic acid by oxidation. Aldehyde dehydrogenases (E.C. 1.2.1.3 and E.C. 1.2.1.5), glycolaldehyde dehydrogenase (E.C. 1.2.1.21), or lactaldehyde dehydrogenase (E.C. 1.2.1.22) can be named as an example.

In a sixth reaction, glycolate (CH₂OH-COOH) is oxidized by an oxidation-reduction reaction, thereby giving glyoxylate (OHC-COOH) and as a result NADH is generated from NAD⁺. This sixth reaction corresponds to decomposition step II in which a 2-oxo acid synthase functions as a catalyst and a reaction of reaction formula 2 above proceeds.

As with the third reaction, the type of the 2-oxo acid synthase is not particularly limited as long as it is an enzyme that can catalyze a reaction of generating 2-oxo acid by oxidation. Lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.1.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93) can be named as an example.

In a seventh reaction, glyoxylate (OHC-COOH) is oxidized with an oxidoreductase, thereby giving oxalate (HOOC-COOH), and as a result, NADH is generated from NAD⁺ The seventh reaction corresponds to decomposition step II in which a 2-oxo acid synthase functions as a catalyst and a reaction of reaction formula 3 below proceeds.

[Chem. 3] **R-CO-CHO → R-CO-COOH**

As with the third and sixth reactions, the type of the 2-oxo acid synthase is not particularly limited as long as it is an enzyme that can catalyze a reaction of generating 2-oxo acid by oxidation. Lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.1.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93) can be named as an example.

In an eighth reaction, oxalate (HOOC-COOH) is decarboxylated by a decarboxylation reaction, thereby giving formate (HCOOH), and carbon dioxide is generated as a result. Like the fourth reaction, the eighth reaction corresponds to decomposition step III in which a 2-oxo acid carboxylyase functions as a catalyst and a reaction of reaction formula 4 above proceeds.

As with the fourth reaction, the type of the 2-oxo acid carboxylyase is not particularly limited as long as it is an enzyme that can catalyze the decarboxylation reaction of a compound having a carboxyl group. Pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.

In a ninth reaction, formate (HCOOH) is oxidized with an oxidoreductase, thereby giving carbon dioxide, and as a result, NADH is generated from NAD⁺. This ninth reaction corresponds to decomposition step V in which a formate dehydrogenase functions as a catalyst and a reaction of reaction formula 8 below proceeds.

[Chem. 8] **HCOOH → CO₂**

In the ninth reaction, other than the formate dehydrogenase, enzymes that react in a similar manner can be used.

As described above, in the course of decomposing glycerol down to carbon dioxide, a total of nine stages of reactions occur and NADH is generated in seven of these reactions. In other words, seven molecules of NADH are generated from one molecule of glycerol. In contrast, according to a conventional method for decomposing a polyol using only an oxidoreductase, the reactions proceed only up to the third reaction, and thus only three molecules of NADH are generated from one glycerol molecule. Therefore, when this method for decomposing a polyol is used, large quantities of NADH can be generated compared to the conventional method for decomposing a polyol.

### <<Decomposition of ethylene glycol (CH₂OH-CH₂OH)>>

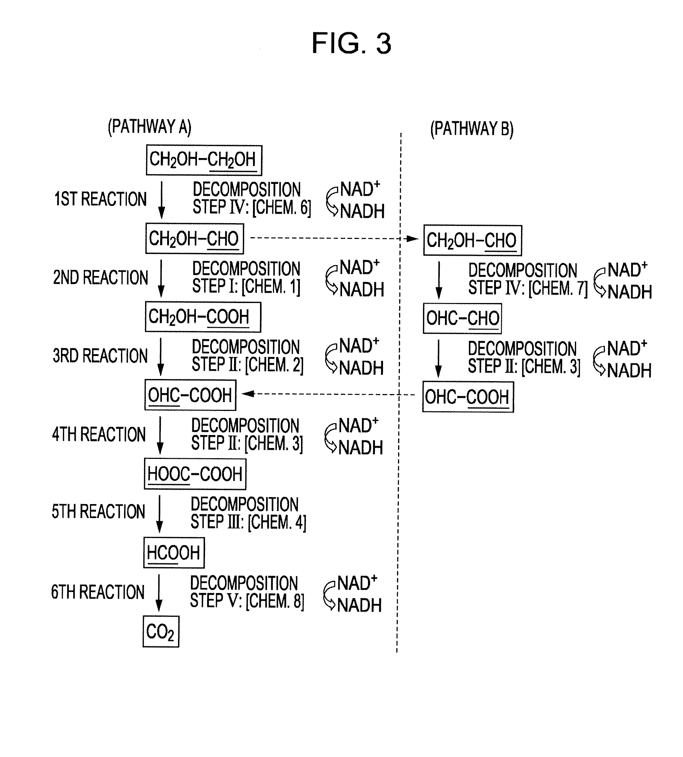

Next, ethylene glycol (CH₂OH-CH₂OH) is used as a specific example of a glycerol-based monosaccharide to describe the method for decomposing a polyol of this embodiment. Fig. 3 illustrates decomposition steps using a method for decomposing a polyol, which is a different embodiment from ones shown in Figs. 1 and 2.

Decomposition of ethylene glycol includes six stages of reactions as shown in Fig. 3. However, depending on the selectivity of the oxidoreductase relative to a hydroxyl group or an aldehyde group, the reaction pathway may vary (refer to pathways A and B in Fig. 3). However, in which pathway the reactions proceed does not make a significant difference since a substrate can be decomposed by the same enzymes and reduced coenzymes can be generated but in different order of enzyme reactions. Here, pathway A is described an example.

In a first reaction, ethylene glycol (CH₂OH-CH₂OH) is oxidized by an oxidation-reduction reaction, thereby giving glycoaldehyde (CH₂OH-CHO), and as a result, NADH is generated from NAD⁺. The first reaction corresponds to decomposition step IV in which a dihydroxyethyl group oxidase functions as a catalyst and a reaction of reaction formula 6 below proceeds.

[Chem. 6] **R-CHOH-CH₂OH → R-CHOH-CHO**

The type of the dihydroxyethyl group oxidase is not particularly limited as long as it is an enzyme that can catalyze an oxidation reaction of a compound having a dihydroxyethyl group. Alcohol dehydrogenases (E.C. 1.1.1.1 and E.C. 1.1.1.71), mannitol 2-dehydrogenase (E.C. 1.1.1.67), glycerol dehydrogenase (E.C. 1.1.1.6), aldehyde reductase (E.C. 1.1.1.21), gluconate 5-dehydrogenase (E.C. 1.1.1.69), or glycol dehydrogenase(E.C. 1.1.1.185) can be named as an example.

As for the reactions following glycoaldehyde (CH₂OH-CHO), decomposition is possible through reactions similar to when glycerol is used, as shown in Fig. 3. Thus, in the course of decomposing ethylene glycol down to carbon dioxide, a total of six stages of reactions occur, and NADH is generated in five of these reactions. In other words, five molecules of NADH are generated from one molecule of ethylene glycol. In contrast, according to a conventional method for decomposing a polyol using only an oxidoreductases, the reactions proceed only up to the fourth reaction, and thus only four molecules of NADH are generated from one glycerol molecule. Therefore, when this method for decomposing a polyol is used, large quantities of NADH can be generated compared to the conventional method for decomposing a polyol.

### <<Decomposition of erythritol (CH₂OH-CHOH-CHOH-CH₂OH)>>

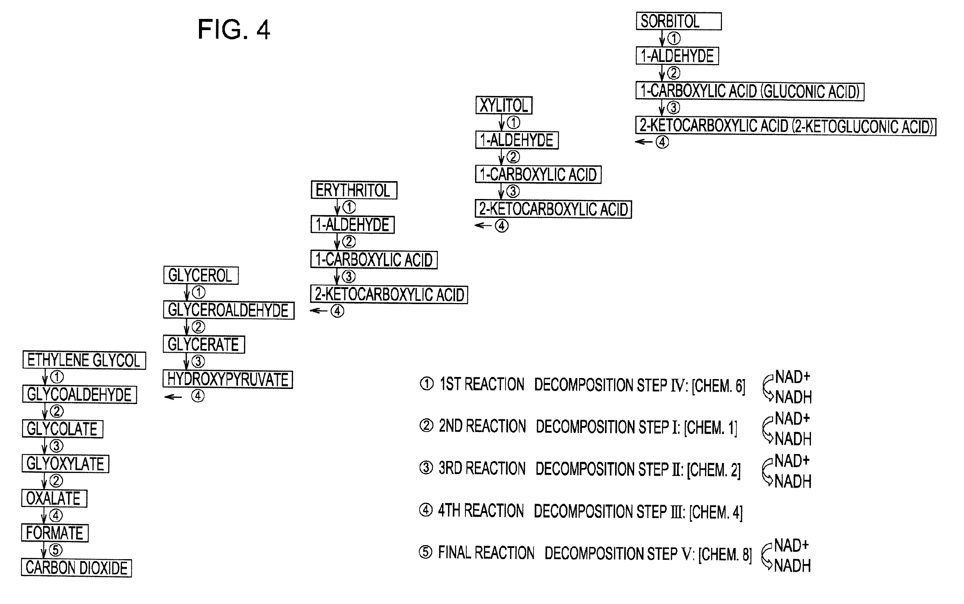

Next, erythritol (CH₂OH-CHOH-CHOH-CH₂OH) is used as a specific example to describe the method for decomposing a polyol according to this embodiment. Fig. 4 illustrates decomposition steps using a method for decomposing a polyol which is a different embodiment from ones illustrated in Figs. 1, 2, and 3.

In a first reaction, erythritol (CH₂OH-CHOH-CHOH-CH₂OH) is oxidized by an oxidation-reduction reaction, thereby giving CH₂OH-CHOH-CHOH-CHO, and as a result, NADH is generated from NAD⁺. The first reaction corresponds to decomposition step IV in which a dihydroxyethyl group oxidase functions as a catalyst and a reaction of reaction formula 6 below proceeds.

[Chem. 6] **R-CHOH-CH₂OH → R-CHOH-CHO**

The type of the dihydroxyethyl group oxidase is not particularly limited as long as it is an enzyme that can catalyze an oxidation reaction of a compound having a dihydroxyethyl group. Alcohol dehydrogenases (E.C. 1.1.1.1 and E.C. 1.1.1.71), mannitol 2-dehydrogenase (E.C. 1.1.1.67), glycerol dehydrogenase (E.C. 1.1.1.6), aldehyde reductase (E.C. 1.1.1.21), gluconate 5-dehydrogenase (E.C. 1.1.1.69), or glycol dehydrogenase(E.C. 1.1.1.185) can be named as an example.

In a second reaction, CH₂OH-CHOH-CHOH-CHO is oxidized by an oxidation-reduction reaction, thereby giving CH₂OH-CHOH-CHOH-COOH, and as a result, NADH is generated from NAD⁺.
This second reaction corresponds to decomposition step I in which a 2-hydroxycarboxylic acid synthase functions as a catalyst and a reaction of reaction formula 1 below proceeds.

[Chem. 1] **R-CHOH-CHO → R-CHOH-COOH**

The type of the 2-hydroxycarboxylic acid synthase is not particularly limited as long as it is an enzyme that can catalyze a reaction of generating 2-hydroxydicarboxylic acid by oxidation. Aldehyde dehydrogenases (E.C. 1.2.1.3 and E.C. 1.2.1.5), glycolaldehyde dehydrogenase (E.C. 1.2.1.21), or lactaldehyde dehydrogenase (E.C. 1.2.1.22) can be named as an example.

In a third reaction, CH₂OH-CHOH-CHOH-COOH is oxidized by an oxidation-reduction reaction, thereby giving CH₂OH-CHOH-CO-COOH, and as a result NADH is generated from NAD⁺. This third reaction corresponds to decomposition step II in which a 2-oxo acid synthase functions as a catalyst and a reaction of reaction formula 2 below proceeds.

[Chem. 2] **R-CHOH-COOH → R-CO-COOH**

The type of the 2-oxo acid synthase is not particularly limited as long as it is an enzyme that can catalyze a reaction of generating 2-oxo acid by oxidation. Lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.1.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93) can be named as an example.

In a fourth reaction, CH₂OH-CHOH-CO-COOH is decarboxylated by a decarboxylation reaction, thereby giving glyceroaldehyde (CH₂OH-CHOH-CHO), and as a result, carbon dioxide is generated. This fourth reaction corresponds to decomposition step III in which a 2-oxo acid carboxylyase, function as a catalyst and a reaction of reaction formula 4 below proceeds.

[Chem. 4] **R-CO-COOH - R-CHO + CO₂**

It should be noted that according to a conventional method that uses only an oxidoreductase, since a compound having a carboxyl group with which the oxidoreductase cannot act is generated in the third reaction, decomposition stops at the third reaction. However, according to this method of decomposing a polyol, since the 2-oxo acid carboxylyase which is a decarboxylase is used, decomposition from a fourth reaction onwards can proceed stepwise.

The type of the 2-oxo acid carboxylyase is not particularly limited as long as it is an enzyme that can catalyze the decarboxylation reaction of a compound having a carboxyl group. Pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.

As for the reactions following glyceroaldehyde (CH₂OH-CHOH-CHO), decomposition is possible through reactions similar to when glycerol is used, as shown in Fig. 4. Thus, in the course of decomposing erythritol down to carbon dioxide, a total of twelve stages of reactions occur, and NADH is generated in nine of these reactions. In other words, nine molecules of NADH, are generated from one molecule of erythritol. In contrast, according to a conventional method for decomposing a polyol using only an oxidoreductase, the reactions proceed only up to the third reaction, and thus only three molecules of NADH are generated from one erythritol molecule. Therefore, when this method for decomposing a polyol is used, large quantities of NADH can be generated compared to the conventional method for decomposing a polyol.

### <<Decomposition of xylitol (CH₂OH-CHOH-CHOH-CHOH-CH2OH)>>

Next, xylitol (CH₂OH-CHOH-CHOH-CHOH-CH₂OH) is used as a specific example of a glycerol-based monosaccharide to describe the method for decomposing a polyol according to this embodiment. Fig. 4 above used to describe decomposition of erythritol is used in the description here.

In a first reaction, xylitol (CH₂OH-CHOH-CHOH-CHOH-CH₂OH) is oxidized by an oxidation-reduction reaction, thereby giving CH₂OH-CHOH-CHOH-CHOH-CHO, and as a result, NADH is generated from NAD⁺. This first reaction corresponds to decomposition step IV in which a dihydroxyethyl group oxidase functions as a catalyst and a reaction of reaction formula 6 below proceeds.

[Chem. 6] **R-CHOH-CH₂OH → R-CHOH-CHO**

The type of the dihydroxyethyl group oxidase is not particularly limited as long as it is an enzyme that can catalyze an oxidation reaction of a compound having a dihydroxyethyl group. Alcohol dehydrogenases (E.C. 1.1.1.1 and E.C. 1.1.1.71), mannitol 2-dehydrogenase (E.C. 1.1.1.67), glycerol dehydrogenase (E.C. 1.1.1.6), aldehyde reductase (E.C. 1.1.1.21), gluconate 5-dehydrogenase (E.C. 1.1.1.69), or glycol dehydrogenase(E.C. 1.1.1.185) can be named as an example.

In a second reaction, CH₂OH-CHOH-CHOH-CHOH-CHO is oxidized by an oxidation-reduction reaction, thereby giving CH₂OH-CHOH-CHOH-CHOH-COOH, and as a result, NADH is generated from NAD⁺. This second reaction corresponds to decomposition step I in which a 2-hydroxycarboxylic acid synthase functions as a catalyst and a reaction of reaction formula 1 below proceeds.

[Chem. 1] **R-CHOH-CHO → R-CHOH-COOH**

The type of the 2-hydroxycarboxylic acid synthase is not particularly limited as long as it is an enzyme that can catalyze a reaction of generating 2-hydroxydicarboxylic acid by oxidation. Aldehyde dehydrogenases (E.C. 1.2.1.3 and E.C. 1.2.1.5), glycolaldehyde dehydrogenase (E.C. 1.2.1.21), or lactaldehyde dehydrogenase (E.C. 1.2.1.22) can be named as an example.

In a third reaction, CH₂OH-CHOH-CHOH-CHOH-COOH is oxidized by an oxidation-reduction reaction, thereby giving CH₂OH-CHOH-CHOH-CO-COOH, and as a result NADH is generated from NAD⁺. This third reaction corresponds to decomposition step II in which a 2-oxo acid synthase functions as a catalyst and a reaction of reaction formula 2 below proceeds.

[Chem. 2] **R-CHOH-COOH → R-CO-COOH**

The type of the 2-oxo acid synthase is not particularly limited as long as it is an enzyme that can catalyze a reaction of generating 2-oxo acid by oxidation. Lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.1.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93) can be named as an example.

In a fourth reaction, CH₂OH-CHOH-CHOH-CO-COOH is decarboxylated by a decarboxylation reaction, thereby giving CH₂OH-CHOH-CHOH-CHO, and as a result, carbon dioxide is generated. This fourth reaction corresponds to decomposition step III in which a 2-oxo acid carboxylyase function as a catalyst and a reaction of reaction formula 4 below proceeds.

[Chem. 4] **R-CO-COOH → R-CHO + CO₂**

It should be noted that according to a conventional method that uses only an oxidoreductase, since a compound having a carboxyl group with which the oxidoreductase cannot act is generated in the third reaction, decomposition stops at the third reaction. However, according to this method of decomposing a polyol, since the 2-oxo acid carboxylyase which is a decarboxylase is used, decomposition from a fourth reaction onwards can proceed stepwise.

The type of the 2-oxo acid carboxylyase is not particularly limited as long as it is an enzyme that can catalyze the decarboxylation reaction of a compound having a carboxyl group. Pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.

As for the reactions following CH₂OH-CHOH-CHOH-CHO, decomposition is possible through reactions similar to when erythritol is used, as shown in Fig. 4. Thus, in the course of decomposing xylitol down to carbon dioxide, a total of fifteen stages of reactions occur, and NADH is generated in eleven of these reactions. In other words, eleven molecules of NADH are generated from one molecule of xylitol. In contrast, according to a conventional method for decomposing a polyol using only an oxidoreductase, the reactions proceed only up to the third reaction, and thus only three molecules of NADH are generated from one xylitol molecule. Therefore, when this method for decomposing a polyol is used, large quantities of NADH can be generated compared to the conventional method for decomposing a polyol.

### <<Decomposition of sorbitol (CH₂OH-CHOH-CHOH-CHOH-CHOH-CH₂OH)>>

Next, sorbitol (CH₂OH-CHOH-CHOH-CHOH-CHOH-CH₂OH) is used as a specific example of a glycerol-based monosaccharide to describe the method for decomposing a polyol according to this embodiment. Fig. 4 above used to describe decomposition of erythritol and xylitol is used in the description here.

In a first reaction, sorbitol (CH₂OH-CHOH-CHOH-CHOH-CHOH-CH₂OH) is oxidized by an oxidation-reduction reaction, thereby giving CH₂OH-CHOH-CHOH-CHOH-CHOH-CHO, and as a result, NADH is generated from NAD⁺. This first reaction corresponds to decomposition step IV in which a dihydroxyethyl group oxidase functions as a catalyst and a reaction of reaction formula 6 below proceeds.

[Chem. 6] **R-CHOH-CH₂OH → R-CHOH-CHO**

The type of the dihydroxyethyl group oxidase is not particularly limited as long as it is an enzyme that can catalyze an oxidation reaction of a compound having a dihydroxyethyl group. Alcohol dehydrogenases (E.C. 1.1.1.1 and E.C. 1.1.1.71), mannitol 2-dehydrogenase (E.C. 1.1.1.67), glycerol dehydrogenase (E.C. 1.1.1.6), aldehyde reductase (E.C. 1.1.1.21), gluconate 5-dehydrogenase (E.C. 1.1.1.69), or glycol dehydrogenase(E.C. 1.1.1.185) can be named as an example.

In a second reaction, CH₂OH-CHOH-CHOH-CHOH-CHOH-CHO is oxidized by an oxidation-reduction reaction, thereby giving CH₂OH-CHOH-CHOH-CHOH-CHOH-COOH, and as a result, NADH is generated from NAD⁺. This second reaction corresponds to decomposition step I in which a 2-hydroxycarboxylic acid synthase functions as a catalyst and a reaction of reaction formula 1 below proceeds.

[Chem. 1] **R-CHOH-CHO → R-CHOH-COOH**

The type of the 2-hydroxycarboxylic acid synthase is not particularly limited as long as it is an enzyme that can catalyze a reaction of generating 2-hydroxydicarboxylic acid by oxidation. Aldehyde dehydrogenases (E.C. 1.2.1.3 and E.C. 1.2.1.5), glycolaldehyde dehydrogenase (E.C. 1.2.1.21), or lactaldehyde dehydrogenase (E.C. 1.2.1.22) can be named as an example.

In a third reaction, CH₂OH-CHOH-CHOH-CHOH-CHOH-COOH is oxidized by an oxidation-reduction reaction, thereby giving CH₂OH-CHOH-CHOH-CHOH-CO-COOH, and as a result NADH is generated from NAD⁺. This third reaction corresponds to decomposition step II in which a 2-oxo acid synthase functions as a catalyst and a reaction of reaction formula 2 below proceeds.

[Chem. 2] **R-CHOH-COOH → R-CO-COOH**

The type of the 2-oxo acid synthase is not particularly limited as long as it is an enzyme that can catalyze a reaction of generating 2-oxo acid by oxidation. Lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase (E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.14), tryptophan dehydrogenase (E.C. 1.4.1.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93) can be named as an example.

In a fourth reaction, CH₂OH-CHOH-CHOH-CHOH-CO-COOH is decarboxylated by a decarboxylation reaction, thereby giving CH₂OH-CHOH-CHOH-CHOH-CHO, and as a result, carbon dioxide is generated. This fourth reaction corresponds to decomposition step III in which a 2-oxo acid carboxylyase function as a catalyst and a reaction of reaction formula 4 below proceeds.

[Chem. 4] **R-CO-COOH → R-CHO + CO₂**

It should be noted that according to a conventional method that uses only an oxidoreductase, since a compound having a carboxyl group with which the oxidoreductase cannot act is generated in the third reaction, decomposition stops at the third reaction. However, according to this method of decomposing a polyol, since the 2-oxo acid carboxylyase which is a decarboxylase is used, decomposition from a fourth reaction onwards can proceed stepwise.

The type of the 2-oxo acid carboxylyase is not particularly limited as long as it is an enzyme that can catalyze the decarboxylation reaction of a compound having a carboxyl group. Pyruvate decarboxylase (E.C. 4.1.1.1), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72) can be named as an example.

As for the reactions following CH₂OH-CHOH-CHOH-CHOH-CHO, decomposition is possible through reactions similar to when xylitol is used, as shown in Fig. 4. Thus, in the course of decomposing sorbitol down to carbon dioxide, a total of eighteen stages of reactions occur, and NADH is generated in fourteen of these reactions. In other words, fourteen molecules of NADH are generated from one molecule of sorbitol. In contrast, according to a conventional method for decomposing a polyol using only an oxidoreductase, the reactions proceed only up to the third reaction, and thus only three molecules of NADH are generated from one sorbitol molecule. Therefore, when this method for decomposing a polyol is used, large quantities of NADH can be generated compared to the conventional method for decomposing a polyol.

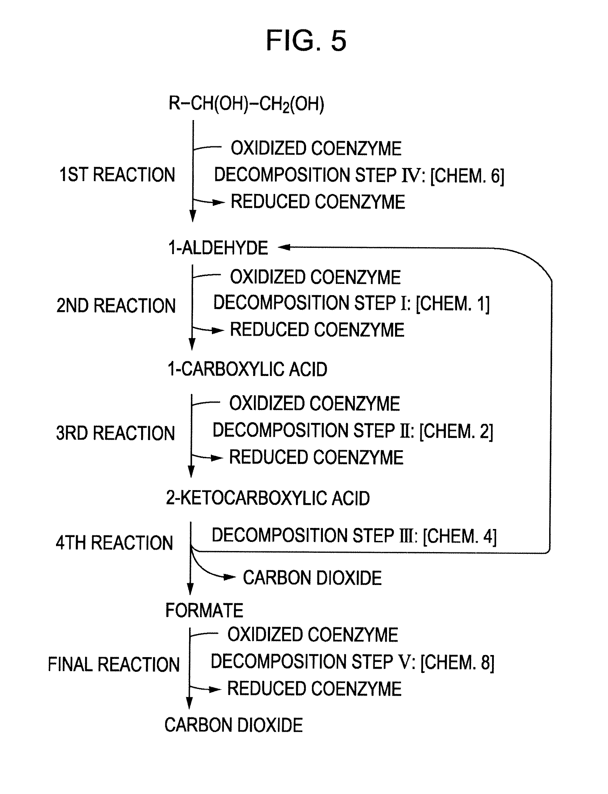

In view of the above, decomposition reactions of glycerol-based monosaccharides can be summarized as schematically illustrated in Fig. 5. As illustrated in Fig. 5, first, decomposition step IV in which a dihydroxyethyl group oxidase functions as a catalyst is performed. Subsequently, decomposition step I in which a 2-hydroxycarboxylic acid synthase functions as a catalyst, decomposition step II in which a 2-oxo acid synthase functions as a catalyst, and decomposition step III in which a 2-oxo acid carboxylyase functions as a catalyst are repeated several times until formate is given. Lastly, decomposition step V in which a formate dehydrogenase functions as a catalyst is performed.

According to a conventional method for decomposing a polyol using only an oxidoreductase, since a carboxyl group cannot be oxidized, the reaction stops at decomposition step II (third reaction) in Fig. 5. However, according to the method of decomposing a polyol of this embodiment, since the 2-oxo acid carboxylyase which is a decarboxylase is used, again, conversion into a substance that can be oxidized with the oxidoreductase is possible and decomposition steps I and II can be repeatedly performed until formate is given by decomposition. Accordingly, when this method for decomposing a polyol is used, large quantities of NADH can be generated compared to the conventional method for decomposing a polyol.

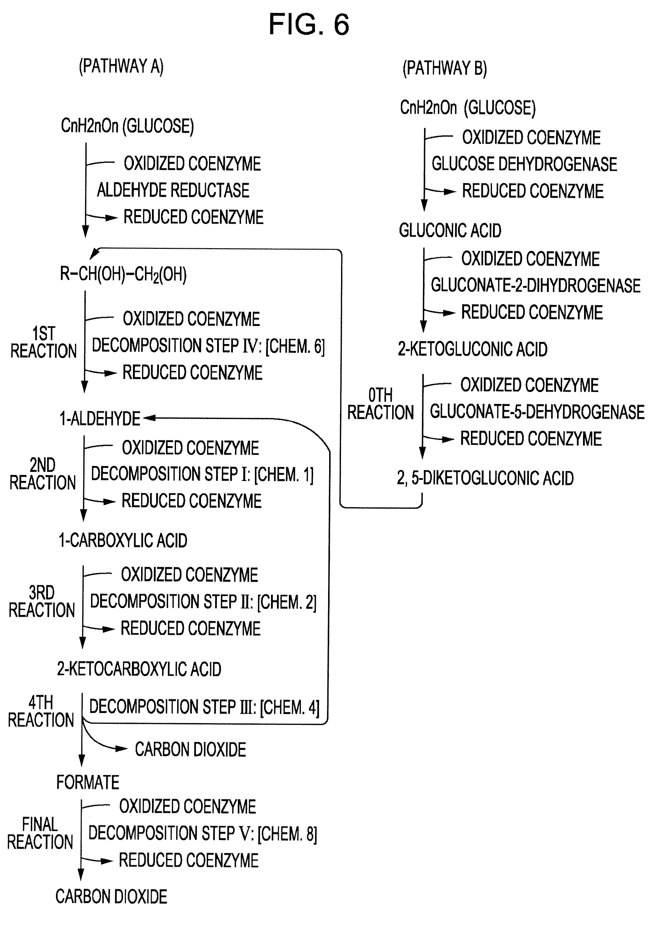

Here, Fig. 6 illustrates a summary of decomposition reactions of glycerol-based monosaccharides and reactions that can utilize such decomposition reactions. As shown in Pathway A in Fig. 6, it is known that glucose, mannose, and xylose, which are gluconic acid-based monosaccharides, are respectively converted into sorbitol, mannitol, and xylitol with aldehyde reductases. Thus, the gluconic acid-based monosaccharides can be decomposed not only through the decomposition steps of gluconic acid-based monosaccharides described in (1), but also through decomposition steps of glycerol-based monosaccharides.

As shown in Pathway B in Fig. 6, it is known that glucose is converted into 2,5-diketogluconic acid by a series of reactions involving a glucose dehydrogenase, a gluconic acid-2-dehydrogenase, and a gluconate 5-dehydrogenase. Then 2,5-diketogluconic acid is capable of producing NADH through decomposition by a glycerol-system reaction. Thus, among gluconic acid-based monosaccharides, glucose can join reactions of the glycerol system through two pathways.

A 0th reaction of Pathway B in Fig. 6 in which 2-ketogluconic acid (CH₂OH-CHOH-CHOH-CHOH-CO-COOH) gives 2,5-diketogluconic acid (CH₂OH-CO-CHOH-CHOH-CO-COOH) with gluconate 5-dehydrogenase corresponds to decomposition step IV in which a dihydroxyethyl group oxidase functions as a catalyst and a reaction of reaction formula 5 below proceeds.

[Chem. 5] **R-CHOH-CH₂OH → R-CO-CH₂OH**

As indicated above, according to the method for decomposing a polyol according to this embodiment, reactions can proceed until a polyol is decomposed into carbon dioxide without stopping the reaction in midway and without using in-vivo multienzyme reactions such as a citric acid cycle. As a result, large quantities of reduced coenzymes can be obtained.

When this method for decomposing a polyol is used in reactions at enzyme electrodes, a large number of electrons can be exchanged through electron mediators from large quantities of reduced coenzymes generated.

At an enzyme electrode, first, when a reduced coenzyme generated is returned (oxidized) to an oxidized coenzyme by a coenzyme oxidase such as diaphorase (DI), an electron is donated to an oxidized electron mediator to reduce the electron mediator. Then the reduced electron mediator donates an electron to the electrode and the electron mediator returns to its oxidized form; and these reactions are repeated. At this time, when the method for decomposing a polyol according to this embodiment is used, since large quantities of reduced coenzymes can be generated, notably high current values and electric capacities can be obtained.

### EXAMPLE 1

In Example 1, whether or not reduced coenzymes were generated by the respective reactions when glycerol was decomposed by using the method for decomposing a polyol described above was confirmed. Table 1 indicates enzymes that were used.

**[Table 1]**

| | |
|---|---|
| Alcohol dehydrogenase | Wako Pure Chemical Industries, Ltd., derived from yeast |
| Aldehyde dehydrogenase | Amano Enzyme Inc., derived from Pseudomonas |
| Lactate dehydrogenase | Amano Enzyme Inc., derived from Staphylococcus |
| Pyruvate decarboxylase | Sigma-Aldrich Corporation, derived from Zymomonas |
| Formate dehydrogenase | Wako Pure Chemical Industries, Ltd., derived from Candida |

Assays of oxidized and reduced coenzymes were done by HPLC. In analysis, a high-performance liquid chromatograph system (produced by Shimadzu Corporation) equipped with SPD-10AVP UV/visible light photodetector, SCL-10AVP system controller, and SIL-10ADVP autosampler, was used. Assay was conducted with a 10 mmol/L phosphoric acid buffer solution (pH 2.6) as a mobile layer and ODS-80Tm (produced by Tosoh Corporation) as a column at a column temperature of 40°C, a flow rate of 1.0 mL/min, and a measurement wavelength of 260 nm.

The activity of each enzyme was measured by the following method.

### (1) Aldehyde reductase activity

An aldehyde reductase was added to a 0.1 mol/L tris-hydrochloric acid buffer solution (pH 8.0) containing 0.10 mol/L xylose and 2.1 mmol/L NAD⁺, and the amount of NADH generated was calculated by measuring the increase per unit time at an absorbance of 340 nm at 25°C. The amount of enzyme that generated 1 µmol of NADH in 1 minute was defined as one unit.

### (2) Alcohol dehydrogenase activity

An alcohol dehydrogenase was added to a 10 mmol/L phosphoric acid buffer solution (pH 8.8) containing 1.0 mol/L ethanol and 0.83 mmol/L NAD⁺, and the amount of NADH generated was calculated by measuring the increase per unit time at an absorbance of 340 nm at 25°C. The amount of enzyme that generated 1 µmol of NADH in 1 minute was defined as one unit.

### (3) Aldehyde dehydrogenase activity

An aldehyde dehydrogenase was added to a 0.1 mol/L tris-hydrochloric acid buffer solution (pH 8.0) containing 0.10 mol/L acetaldehyde and 2.1 mmol/L NAD⁺, and the amount of NADH generated was calculated by measuring the increase per unit time at an absorbance of 340 nm at 25°C. The amount of enzyme that generated 1 µmol of NADH in 1 minute was defined as one unit.

### (4) Lactate dehydrogenase activity

An aldehyde dehydrogenase was added to a 0.1 mol/L tris-hydrochloric acid buffer solution (pH 7.8) containing 1.8 mmol/L pyruvate and 0.20 mmol/L NADH, and the amount of NAD⁺ generated was calculated by measuring the decrease per unit time at an absorbance of 340 nm at 25°C. The amount of enzyme that consumed 1 µmol of NADH in 1 minute was defined as one unit.

### (5) Pyruvate decarboxylase

A pyruvate decarboxylase was added to a 190 mmol/L citric acid buffer solution (pH 6.0) containing 340 mmol/L pyruvic acid, 110 mmol/L NADH, and 3.5 Unit/mL alcohol dehydrogenase, and the amount of NAD⁺ generated was calculated by measuring the decrease per unit time at an absorbance of 340 nm at 25°C. The amount of enzyme that generated 1 µmol of NAD⁺ in 1 minute was defined as one unit.

### (6) Formate dehydrogenase

A formate dehydrogenase was added to a 80 mmol/L phosphoric acid buffer solution (pH 8.8) containing 0.3 mol/L formic acid and 1.0 mg/mL NAD⁺ as substrates, and the amount of NADH generated was calculated by measuring the increase per unit time at an absorbance of 340 nm at 30°C. The amount of enzyme that generated 1 µmol of NADH in 1 minute was defined as one unit.

Reaction conditions of the respective reactions (refer to Fig. 2, first to ninth reactions) of decomposing glycerol are shown in Tables 2 to 8.

**[Table 2]**

| <First reaction> | |
|---|---|
| Substrate | Glycerol 100 mmol/L |
| Enzyme | Alcohol dehydrogenase 0.003 U/mL |
| Oxidized coenzyme | NAD⁺ 2 mmol/L |
| Buffer solution | Phosphoric acid buffer solution pH 8.0 |
| Analysis of product | 340 nm absorbance and HPLC |
| Reaction temperature | 25°C |

**[Table 3]**

| <Second reaction> | |
|---|---|
| Substrate | Glyceroaldehyde 200 mmol/L |
| Enzyme | Aldehyde dehydrogenase 4 U/mL |
| Oxidized coenzyme | NAD⁺ 3 mmol/L |
| Buffer solution | Phosphoric acid buffer solution pH 7.0 |
| Analysis of product | 340 nm absorbance and HPLC |
| Reaction temperature | 25°C |

**[Table 4]**

| <Third reaction> | |
|---|---|
| Substrate | Glycerate 33 mmol/L |
| Enzyme | Lactate dehydrogenase 22 U/mL |
| Oxidized coenzyme | NAD⁺ 2 mmol/L |
| Buffer solution | Phosphoric acid buffer solution pH 8.0 |
| Analysis of product | 340 nm absorbance and HPLC |
| Reaction temperature | 25°C |

**[Table 5]**

| <Fourth to fifth reactions> | |
|---|---|
| Substrate | Hydroxy pyruvate 100 mmol/L |
| Enzyme | Pyruvate decarboxylase 2 U/mL |
| | Aldehyde dehydrogenase 15 U/mL |
| Oxidized coenzyme | NAD⁺ 2 mmol/L |
| Coenzyme | Thiamine diphosphoric acid (TPP) 0.05 mmol/L |
| Buffer solution | Phosphoric acid buffer solution pH 8.0 |
| Analysis of product | 340 nm absorbance and HPLC |
| Reaction temperature | 25°C |

**[Table 6]**

| <Sixth reaction> | |
|---|---|
| Substrate | Glycolate 33 mmol/L |
| Enzyme | Lactate dehydrogenase 22 U/mL |
| Oxidized coenzyme | NAD⁺ 2 mmol/L |
| Buffer solution | Phosphoric acid buffer solution pH 8.0 |
| Analysis of product | 340 nm absorbance and HPLC |
| Reaction temperature | 25°C |

**[Table 7]**

| <Seventh reaction> | |
|---|---|
| Substrate | Glyoxylate 33 mmol/L |
| Enzyme | Aldehyde dehydrogenase 1.7 U/mL |
| Oxidized coenzyme | NAD⁺ 2 mmol/L |
| Buffer solution | Phosphoric acid buffer solution pH 8.0 |
| Analysis of product | 340 nm absorbance and HPLC |
| Reaction temperature | 25°C |

**[Table 8]**

| <Eighth to ninth reactions> | |
|---|---|
| Substrate | Oxalate 100 mmol/L |
| Enzyme | Pyruvate decarboxylase 2 U/mL |
| | Formate dehydrogenase 2.5 U/mL |
| Oxidized coenzyme | NAD⁺ 2 mmol/L |
| Coenzyme | Thiamine diphosphoric acid (TPP) 0.05 mmol/L |
| Buffer solution | Phosphoric acid buffer solution pH 8.0 |
| Analysis of product | 340 nm absorbance and HPLC |
| Reaction temperature | 25°C |

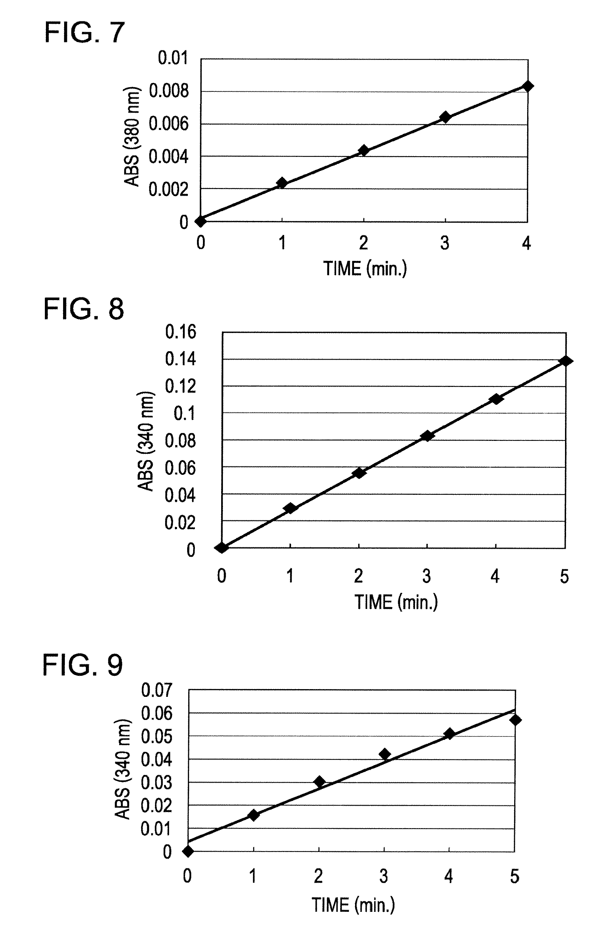

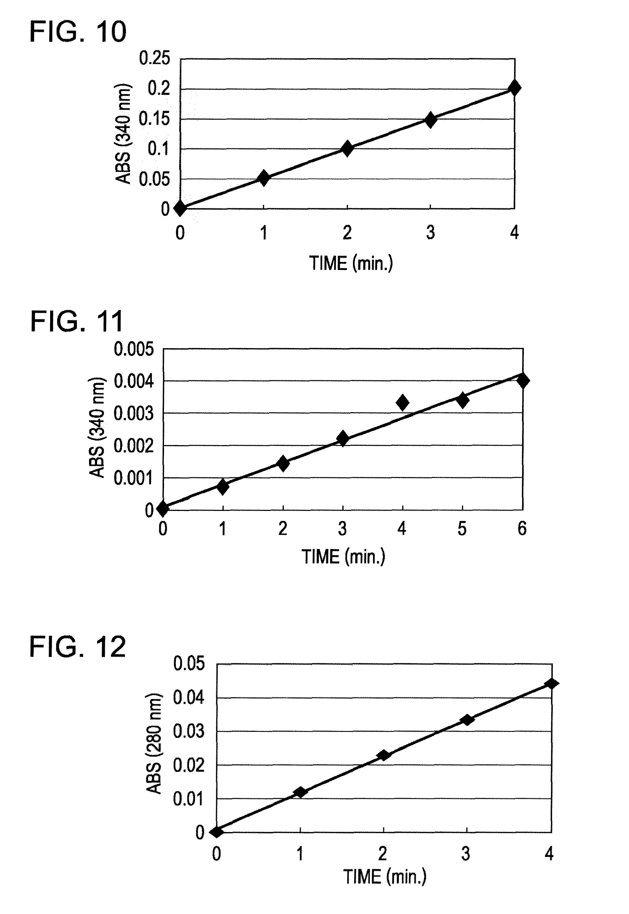

Reduced enzymes NADH generated in the respective reactions of Tables 2 to 8 were analyzed by HPLC and as a result, generation of NADH was confirmed in all reactions. The results of analyzing the amount of NADH generated in the course of reactions with a spectrophotometer are shown in Figs. 7 to 13.

As shown in Figs. 7 to 13, the decomposition reactions of glycerol proceeds until carbon dioxide is given and generation of a reduced coenzyme, NADH was confirmed in all of the reactions involving oxidation-reduction reactions. Accordingly, it has been found that in Example 1, when the method for decomposing a polyol of this embodiment is used in decomposing a glycerol-based monosaccharide, the reactions proceed in multiple stages and NADH is generated thereby in multiple stages.

### EXAMPLE 2

In Example 2, whether or not reduced coenzymes were generated by the respective reactions when ethylene glycol was decomposed by using the method for decomposing a polyol described above was confirmed. Table 9 indicates enzymes that were used. The assay of the oxidized and reduced coenzymes were conducted as in Example 1.

**[Table 9]**

| | |
|---|---|
| Alcohol dehydrogenase | Mako Pure Chemical Industries, Ltd., derived from yeast |
| Aldehyde dehydrogenase | Amano Enzyme Inc., derived from Pseudomonas |
| Lactate dehydrogenase | Amano Enzyme Inc., derived from Staphylococcus |
| Aldehyde reductase | Amano Enzyme Inc., derived from Candida |
| Pyruvate decarboxylase | Sigma-Aldrich Corporation, derived from Zymomonas |
| Formate dehydrogenase | Wako Pure Chemical Industries, Ltd., derived from Candida |

Reaction conditions of the respective reactions (refer to Fig. 3, first to sixth reactions) of decomposing ethylene glycol are shown in Tables 10 to 14.

**[Table 10]**

| <First reaction> | |
|---|---|
| Substrate | Ethylene glycol 100 mmol/L |
| Enzyme | Alcohol dehydrogenase 100 U/mL |
| Oxidized coenzyme | NAD⁺ 3 mmol/L |
| Buffer solution | Phosphoric acid buffer solution pH 7.0 |
| Analysis of product | 340 nm absorbance and HPLC |
| Reaction temperature | 25°C |

**[Table 11]**

| <Second reaction> | |
|---|---|
| Substrate | Glycoaldehyde 200 mmol/L |
| Enzyme | Aldehyde dehydrogenase 5 U/mL |
| Oxidized coenzyme | NAD⁺ 3 mmol/L |
| Buffer solution | Phosphoric acid buffer solution pH 7.0 |
| Analysis of product | 340 nm absorbance and HPLC |
| Reaction temperature | 25°C |

**[Table 12]**

| <Third reaction> | |
|---|---|
| Substrate | Glycolate 33 mmol/L |
| Enzyme | Lactate dehydrogenase 22 U/mL |
| Oxidized coenzyme | NAD⁺ 2 mmol/L |
| Buffer solution | Phosphoric acid buffer solution pH 8.0 |
| Analysis of product | 340 nm absorbance and HPLC |
| Reaction temperature | 25°C |

**[Table 13]**

| <Fourth reaction> | |
|---|---|
| Substrate | Glyoxylate 33 mmol/L |
| Enzyme | Aldehyde reductase 2 U/mL |
| Oxidized coenzyme | NAD⁺ 2 mmol/L |
| Buffer solution | Phosphoric acid buffer solution pH 8.0 |
| Analysis of product | 340 nm absorbance and HPLC |
| Reaction temperature | 25°C |

**[Table 14]**

| <Fifth to sixth reactions> | |
|---|---|
| Substrate | Oxalate 100 mmol/L |
| Enzyme | Pyruvate decarboxylase 2 U/mL |
| | Formate dehydrogenase 2.5 U/mL |
| Oxidized coenzyme | NAD⁺ 3 mmol/L |
| Coenzyme | Thiamine diphosphoric acid (TPP) 5 mmol/L |
| Buffer solution | Phosphoric acid buffer solution pH 8.0 |
| Analysis of product | 340 nm absorbance and HPLC |
| Reaction temperature | 25°C |

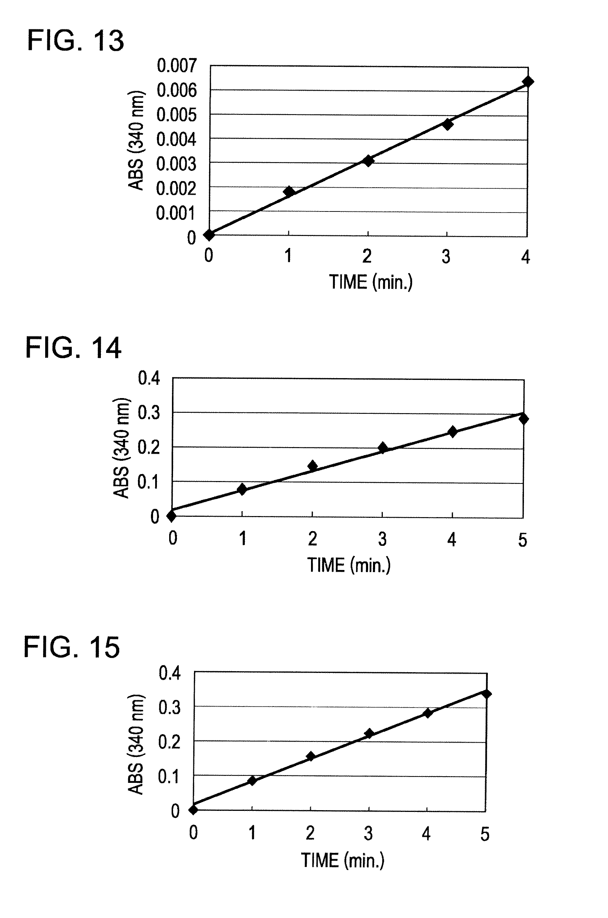

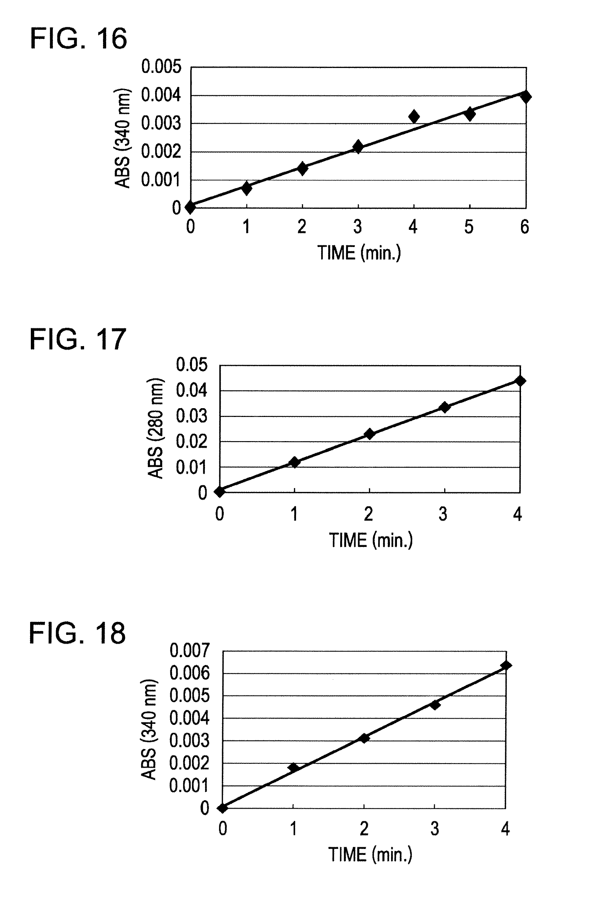

Reduced enzymes NADH generated in the respective reactions of Tables 10 to 14 were analyzed by HPLC and as a result, generation of NADH was confirmed in all reactions. The results of analyzing the amount of NADH generated in the course of reactions with a spectrophotometer are shown in Figs. 14 to 18.

As shown in Figs. 14 to 18, the decomposition reactions of ethylene glycol proceeds until carbon dioxide is given and generation of a reduced coenzyme, NADH was confirmed in all of the reactions involving oxidation-reduction reactions. Accordingly, it has been found that in Example 2, as in Example 1, when the method for decomposing a polyol of this embodiment is used in decomposing a glycerol-based monosaccharide, the reactions proceed in multiple stages and NADH is generated thereby in multiple stages.

### EXAMPLE 3

In Example 3, whether or not erythritol, xylitol, and sorbitol can serve as substrates of aldehyde dehydrogenases or aldehyde reductases was confirmed. To be more specific, an alcohol dehydrogenase and an aldehyde reductase were allow to act with each substrate and the amount of NADH generated was comparatively investigated. The reaction conditions are shown in Table 15.

**[Table 15]**

| | | |
|---|---|---|
| Buffer solution | | 50 mmol/L phosphoric acid buffer solution |
| Substrate | | |
| | Ethylene glycol | 100 mmol/L each |
| | Glycerol | |
| | Erythritol | |
| | Xylitol | |
| | Sorbitol | |
| NAD⁺ | | 1.3 mg/mL |
| Alcohol dehydrogenase | | 2.5 µ/mL each |
| Aldehyde reductase | | |
| Reaction temperature | | 25°C |

Results are shown in Table 16. Individual relative values are indicated as relative values by assuming the amount of NADH generated from action of the alcohol dehydrogenase with ethylene glycol to be 100.

**[Table 16]**

| Substrate (100 mmol/L) | Amount of reduced coenzyme generated (relative value %) | |
|---|---|---|
| | Alcohol dehydrogenase | Aldehyde reductase |
| Ethylene glycol | 100 | 4.0 |
| Glycerol | 0.6 | 7.0 |
| Erythritol | 6.0 | 50 |
| Xylitol | 0.4 | 34 |
| Sorbitol | 0.7 | 100 |

As shown in Table 16, ethylene glycol and glycerol generated NADH by being oxidized with the alcohol dehydrogenase. Moreover, it was found that glycerol, erythritol, xylitol, and sorbitol were more susceptible to action of the aldehyde reductase rather than the alcohol dehydrogenase.

It was found in Example 3 that a polyol compound represented by chemical formula 11 below can be decomposed by the method for decomposing a polyol described above.

[Chem. 11] R-CHOH-CH₂OH (R: (CHOH)ₙ-CH₂- or H)

Moreover, since sugars such as glucose, mannose, and xylose are known to be converted into sorbitol, mannitol, and xylitol, respectively, by actions of aldehyde reductases, it has also been found that a polyol compound represented by chemical formula 9 below can be decomposed by the method for decomposing a polyol described above.

[Chem. 9] CₙH₂ₙOₙ

The overall results of Examples 1 to 3 show that when the methods of decomposing a polyol of the embodiments described above are used, large quantities of reduced coenzymes can be generated in multiple stages in steps of decomposing polyol compounds such as glycerol-based monosaccharides and gluconic acid-based monosaccharides.

### EXAMPLE 4

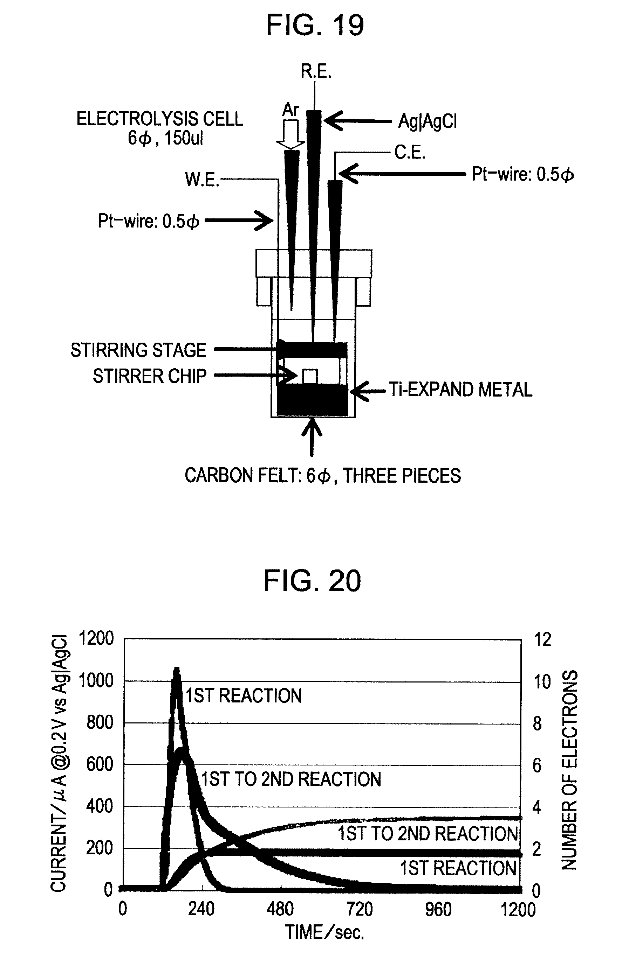

In Example 4, how the number of reactive electrons changes with the stepwise progress of the glucose decomposition reactions was investigated. To be more specific, a prototype battery shown in Fig. 19 was fabricated, and the changes in electric current per decomposition time and the number of reactive electrons when glucose was used as a substrate were obtained. The composition of the solution in the battery is shown in Table 17. Note that a 0.1 M aqueous sodium phosphate solution (pH 7, IS (ion strength) = 0.3) was used as a measurement solution and a diluted solution.

**[Table 17]**

| | |
|---|---|
| Buffer | 44.1 µL |
| Mutarotase (MUT) | 20 U, 22.1 µL |
| Diaphorase (DI) | 150 U, 22.1 µL |
| Glucose dehydrogenase (GDH): first reaction | 128 U, 22.1 µL |
| Gluconate 5-dehydrogenase (Gn5DH): second reaction | 12 U, 11.0 µL |
| Gluconate 2-dehydrogenase (Gn2DH): third reaction | 15 U, 5.5 µL |
| Aldehyde reductase: fourth reaction | 15 U, 5.5 µL |
| Aldehyde dehydrogenase: fifth reaction | 15 U, 5.5 µL |
| NAD⁺ | 8.8 mM, 8.8 µL |
| 2-amino-3-carboxy-1,4 Naphthoquinone (ACNQ) | 0.22 mM, 2.2 µL |
| Glucose | 4.4 mM, 1.1 µL |
| Total | 150 µL |

### (1) First to second reactions

The number of reactive electrons was compared between when only the first reaction (refer to Fig. 1) was conducted and when the first reaction to the second reaction (refer to Fig. 1) were conducted in decomposing glucose.

The measurement results of current values are shown in Fig. 20. The number of reactive electrons was calculated from the measurement results of Fig. 20 and the results are shown in Table 18. These results show that in a system to which Gn5DH is added, the electric capacity is ideally nearly doubled compared to the system to which no addition is made.

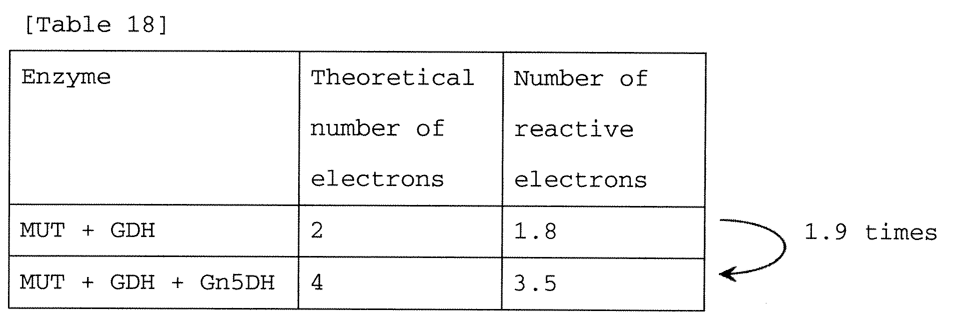

### (2) First to third reactions

The number of reactive electrons was compared between when only the first to second reactions (refer to Fig. 1) were conducted and when the first to third reactions were conducted in decomposing glucose.

As in (1), current values were measured and the number of reactive electrons was calculated by the same method as in Fig. 20. The results are shown in Table 19.

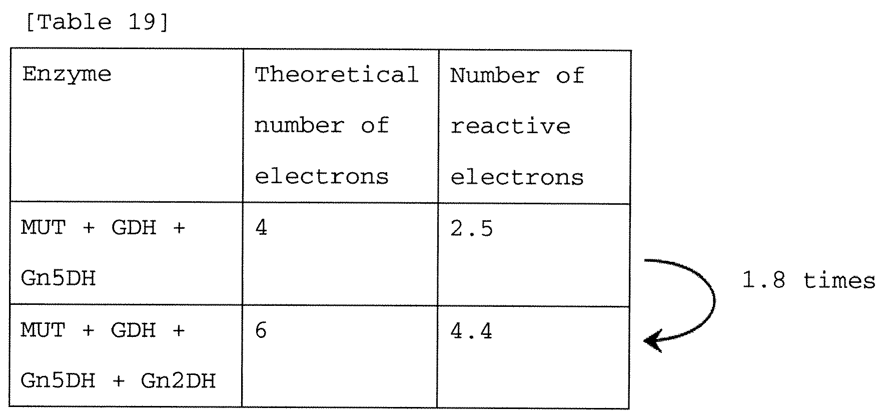

### (3) First to fifth reactions

The number of reactive electrons was compared between when only the first to third reactions (refer to Fig. 1) were conducted and when the first to fifth reactions (refer to Fig. 1) were conducted in decomposing glucose.

As in (1) and (2), current values were measured and the number of reactive electrons was calculated by the same method as in Fig. 20. The results are shown in Table 20.

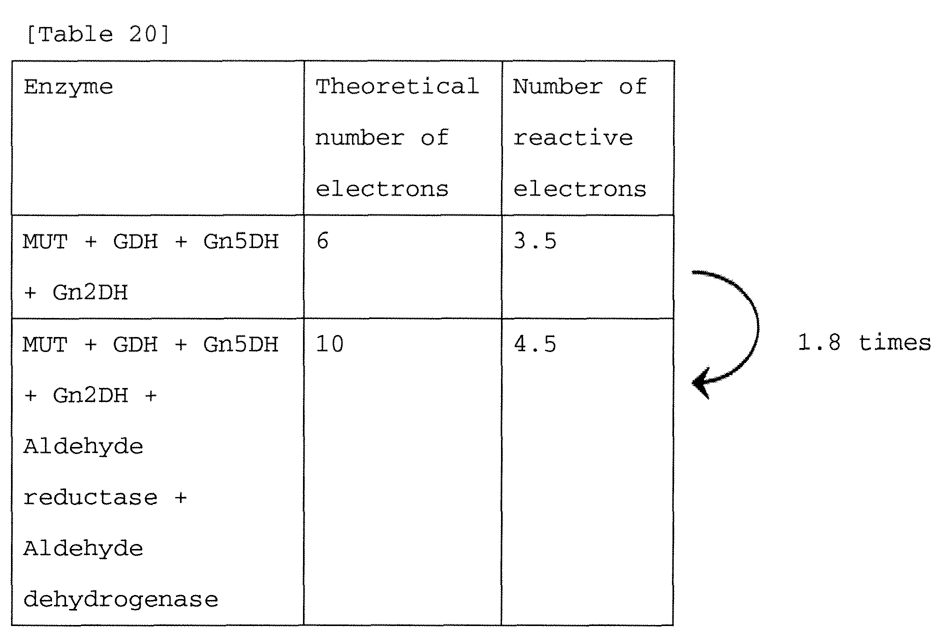

From the above-described results, it could be confirmed that the actual number of reactive electrons increased as the decomposition reactions of glucose proceeded stepwise. In other words, it could be confirmed that the number of reactive electrons increased as the decomposition reactions of the polyol proceeded. Accordingly, it has been suggested on the basis of the results of Example 4 that the number of reactive electrons will increase as the polyol decomposition reactions proceed from the sixth reaction onwards.

### EXAMPLE 5

In Example 5, actual current values were compared between when only the first reaction (refer to Fig. 1) was conducted and when the first to second reactions (refer to Fig. 1) were conducted in decomposing glucose.

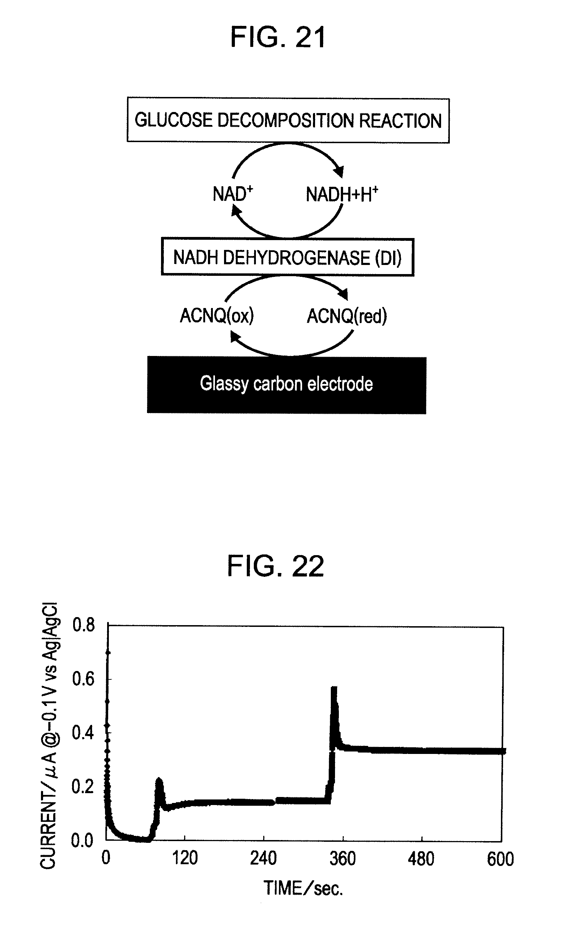

The outline of the reactions on an electrode of this example is shown in Fig. 21. NADH generated by a glucose decomposition reaction is oxidized with a dehydrogenase, diaphorase (DI) and an electron is donated to an oxidized form of ACNQ serving as an electron mediator to form a reduced form. The reduced form of ACNQ then donates an electron to the electrode and returns to an oxidized form. At this time, NADH oxidized with diaphorase (DI) returns to NAD⁺ and reused in the glucose decomposition reaction.

Measurement conditions are shown in Table 21 and the composition of a solution in the battery is shown in Table 22. The composition was adjusted so that the rate of generating NADH by glucose decomposition reactions is a rate-determining step.

**[Table 21]**

| | |
|---|---|
| Buffer: 0.1 M Tris-HCl-KCl (I.S. = 0.3) | pH 10, 1 mL |
| Temperature | 25°C |
| Electrode: Glassy Carbon | 3 φ, 0.071 cm² |

**[Table 22]**

| | |
|---|---|
| Diaphorase (DI) | 80 U |
| NADH | 20 uM |
| 2-amino-3-carboxy-1,4 Naphthoquinone (ACNQ) | 20 uM |
| Glucose | 20 mM |
| Glucose dehydrogenase (GDH): first reaction | 6.4 U |
| Gluconate 5-dehydrogenase (Gn5DH): second reaction | 44 U |

Measurement results are shown in Fig. 22. As shown in Fig. 22, it was confirmed that the actual steady current value was nearly doubled when the first to second reactions (refer to Fig. 1) were conducted compared when only the first reaction was conducted in decomposing glucose. This shows that in a system to which Ga5DH is added, the decomposition rate of NADH ideally nearly doubled compared to the system which no addition is made. In other words, it could be confirmed that the actual current values increased with progress of the polyol decomposition reactions. Accordingly, it was suggested from the results of Example 5 that the actual current values will increase with the progress of the polyol decomposition reactions from the third reaction onwards.

### EXAMPLE 6

In Example 6, actual current values were compared between when only the first reaction (refer to Fig. 1) was conducted and when the first to second reactions (refer to Fig. 1) were conducted in decomposing glucose as with Example 5 but with GDH and Gn5DH immobilized on a porous carbon electrode.

Enzyme/coenzyme/electron mediator-immobilized electrodes 1 to 3 used in Example 6 were prepared as follows.
First, as described below, respective solutions (1) to (5) were prepared. A 0.1 M sodium dihydrogen phosphate (NaH₂PO₄) buffer solution (pH 7, IS (ion strength) = 0.3) was used as a buffer solution for preparing solutions.

### (1) GDH/DI enzyme buffer solution

Ten to a hundred milligrams of a diaphorase (DI (E.C. 1.6.99), produced by Amano Enzyme Inc.) was weighed and dissolved in 0.2 mL of the buffer solution described above (solution (1)'). The buffer solution in which the enzyme is to be dissolved is preferably refrigerated to 8°C or lower until just before use and the enzyme buffer solution is preferably refrigerated to 8°C or lower as much as possible. Five to thirty milligrams of GDH (NAD-dependent (E.C. 1.1.1.47), produced by Amano Enzyme Inc.) was weighed and dissolved in 0.3 mL of the buffer solution described above. To the resulting solution, 20 µL of the solution (1)' was added and thoroughly mixed to prepare a GDH/DI enzyme buffer solution (1).

### (2) NADH buffer solution

Fifty to a hundred milligrams of NADH (produced by Sigma Aldrich Corporation, N-8129) was weighed and dissolved in 0.1 mL of the buffer solution to prepare a NADH buffer solution (2).

### (3) ANQ acetone solution

Fifty to a hundred milligrams of 2-amino-1,4-naphthoquinone (ANQ) (synthetic product) was weighed and dissolved in 1 mL of an acetone solution to prepare an ANQ acetone solution (3).

### (4) PLL aqueous solution

An appropriate amount of poly-L-lysine hydrobromide (PLL) (produced by Wako, 164-16961) was weighed and dissolved in ion exchange water to achieve 2 wt% and to prepare a PLL aqueous solution (4).

### (5) PAAcNa aqueous solution

An appropriate amount of sodium polyacrylate (PAAcNa) (produced by Aldrich, 041-00595) was weighed and dissolved in ion exchange water to achieve 0.022 wt% and to prepare a PAAcNa aqueous solution (5).

The solutions (1) to (3) prepared as described above were sampled by amounts indicated in Table 23 below and mixed. The mixture solution was applied with a micro syringe on a carbon felt electrode (produced by Toray, trade name: Trayca mat, 1.0 × 1.0 cm², thickness: 2 mm) serving as an electrode material, and then dried as needed to prepare an enzyme/coenzyme/electron mediator coated electrode.

**[Table 23]**

| | |
|---|---|
| GDH/DI enzyme buffer solution (1) | 32 µL |
| NADH buffer solution (2) | 8 µL |
| ANQ acetone solution (3) | 80 µL |

### <Electrode 1>

After the PLL aqueous solution (4) and the PAAcNa aqueous solution (5) in amounts indicated in Table 24 below were applied on the enzyme/coenzyme/electron mediator coated electrode described above, drying was conducted as needed to prepare an enzyme/coenzyme/electron mediator-immobilized electrode 1.

**[Table 24]**

| | |
|---|---|
| PLL aqueous solution (4) | 40 µL |
| PAAcNa aqueous solution (5) | 48 µL |

### <Electrode 2 and electrode 3>

A GnL buffer solution (1 U/µL) and a Ga5DH buffer solution (1.2 U/µL) were applied on the enzyme/coenzyme/electron mediator coated electrode as indicated in Table 25 and dried as needed. Subsequently, after the PLL aqueous solution (4) and the PAAcNa aqueous solution (5) in amounts indicated in Table 24 were applied, drying was conducted as needed to prepare enzyme/coenzyme/electron mediator-immobilized electrode 2 and electrode 3.

**[Table 25]**

| | GnL buffer solution (1 U/µL) | Gn5DH buffer solution (1.2 U/µL) |
|---|---|---|
| Electrode 2 | 0 | 40 |
| Electrode 3 | 20 | 40 |

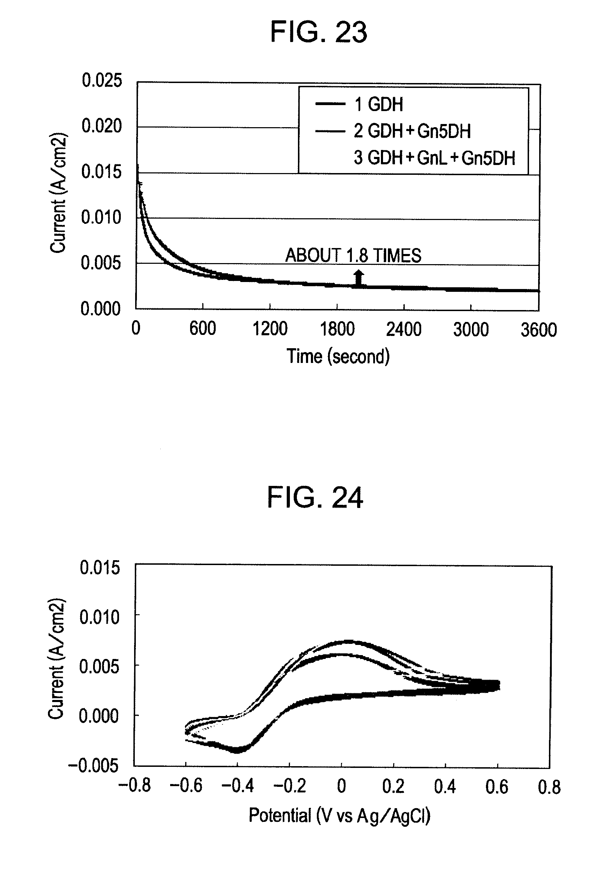

Measurement results are shown in Figs. 23 and 24. As shown in Figs. 23 and 24, it could be confirmed that the actual steady current values achieved when the first to second reactions (refer to Fig. 1) were conducted (electrode 3) were close to an ideal value, i.e., about 1.8 times compared to that achieved when only the first reaction (refer to Fig. 1) was conducted (electrode 1). In other words, it was confirmed that even when the enzyme was immobilized on a porous carbon electrode, the actual current values increased with the progress of the polyol decomposition reactions. Accordingly, it was suggested from the results of Example 6 that even when the enzyme is immobilized on the electrode, the actual current values will increase with the progress of the polyol decomposition reactions from the third reaction onwards. Note that the increase in current value was not observed from the electrode 2. It was found that in this porous carbon electrode, GnL (gluconolactonase), i.e., a hydronase, is needed.

### Industrial Applicability

Since oxidation reactions and decarboxylation reactions can repeatedly proceed with respect to a desired substrate when the electrode according to one embodiment of the present invention is used, large quantities of reduced coenzymes can be generated as a result. Thus, when used in enzyme sensors and fuel batteries, large current values and electric capacities can be obtained compared to conventional products.

Since enzyme sensors and fuel batteries offer large current values and electric capacity, they can be suitably used in all types of electronic appliances application to which formally regarded as difficult.
Although the present invention has been described above from viewpoints of exemplary embodiments, the present invention is not limited to these. It is obvious for persons skilled in the art that various improvements and modifications of the structures of the present invention are possible without departing from the scope and spirit of the present invention. In view of the description above, the present invention is intended to encompass the improvements and modifications of this invention and such improvements and modifications are included in the scope of the claims and their equivalents.
The present application contains subject matter related to that disclosed in Japanese Priority Patent Application JP 2007-316759 filed in the Japan Patent Office on December 7, 2007, the entire content of which is hereby incorporated by reference.

## Claims

1. An electrode comprising:
a 2-hydroxycarboxylic acid synthase;
a 2-oxo acid synthase; and
a 2-oxo acid carboxylyase.

2. The electrode according to Claim 1, further comprising a dihydroxyethyl group oxidase.

3. The electrode according to Claim 1 or 2, further comprising a formate dehydrogenase.

4. The electrode according to Claim 1, wherein the 2-hydroxycarboxylic acid synthase is selected from aldehyde dehydrogenases (E.C. 1.2.1.3 and E.C. 1.2.1.5), glycolaldehyde dehydrogenase (E.C. 1.2.1.21), or lactaldehyde dehydrogenase (E.C. 1.2.1.22),
the 2-oxo acid synthase is selected from lactate dehydrogenases (E.C. 1.1.1.27 and E.C. 1.1.1.28), malate dehydrogenase (E.C. 1.1.1.37), gluconate 2-dehydrogenase (E.C. 1.1.1.215), 2-hydroxy-fatty-acid dehydrogenases (E.C. 1.1.1.98 and E.C. 1.1.1.99), glycerate dehydrogenase (E.C. 1.1.1.29), glyoxylate reductase(E.C. 1.1.1.26), hydroxypyruvate reductase (E.C. 1.1.1.81), isocitrate dehydrogenase (E.C. 1.1.1.41), amino-acid dehydrogenase (E.C. 1.4.1.5), alanine dehydrogenase (E.C. 1.4.1.1), glutamate dehydrogenases (E.C. 1.4.1.2 and E.C. 1.4.1.3), serine 2-dehydrogenase (E.C. 1.4.1.7), valine dehydrogenase (E.C. 1.4.1.8), leucine dehydrogenase (E.C. 1.4.1.9), glycine dehydrogenase (E.C. 1.4.1.10), glutamate synthase (E.C. 1.4.1.24), tryptophan dehydrogenase (E.C. 1.4.1.19), phenylalanine dehydrogenase (E.C. 1.4.1.20), aspartate dehydrogenase (E.C. 1.4.1.21), 2-oxoaldehyde dehydrogenase (E.C. 1.2.1.23), malate dehydrogenase (E.C. 1.1.1.83), or tartrate dehydrogenase (E.C. 1.1.1.93), and
the 2-oxo acid carboxylyase is selected from pyruvate decarboxylase (E.C. 4.1.11), hydroxypyruvate decarboxylase (E.C. 4.1.1.40), 2-oxoglutarate decarboxylase (E.C. 4.1.1.71), or branched-chain-2-oxoacid decarboxylase (E.C. 4.1.1.72).

5. The electrode according to Claim 2, wherein the dihydroxyethyl group oxidase is selected from alcohol dehydrogenases (E.C. 1.1.1.1 and E.C. 1.1.1.71), mannitol 2-dehydrogenase (E.C. 1.1.1.67), glycerol dehydrogenase (E.C. 1.1.1.6), aldehyde reductase (E.C. 1.1.1.21), gluconate 5-dehydrogenase (E.C. 1.1.1.69), or glycol dehydrogenase (E.C. 1.1.1.185).

6. An enzyme sensor comprising an electrode, wherein the electrode includes a 2-hydroxycarboxylic acid synthase, a 2-oxo acid synthase, and a 2-oxo acid carboxylyase.

7. A fuel battery comprising an electrode, wherein the electrode includes a 2-hydroxycarboxylic acid synthase, a 2-oxo acid synthase, and a 2-oxo acid carboxylyase.

8. An electronic device comprising an enzyme sensor including an electrode,
wherein the electrode includes a 2-hydroxycarboxylic acid synthase, a 2-oxo acid synthase, and a 2-oxo acid carboxylyase.

9. An electronic device comprising a fuel battery including an electrode,
wherein the electrode includes a 2-hydroxycarboxylic acid synthase, a 2-oxo acid synthase, and a 2-oxo acid carboxylyase.

10. A method for decomposing a polyol, comprising:
a decomposition step I in which a 2-hydroxycarboxylic acid synthase functions as a catalyst;
a decomposition step II in which a 2-oxo acid synthase functions as a catalyst; and
a decomposition step III in which a 2-oxo acid carboxylyase functions as a catalyst.

11. The method for decomposing a polyol according to Claim 10, further comprising a decomposition step IV in which a dihydroxyethyl group oxidase functions as a catalyst.

12. The method for decomposing a polyol according to Claim 10 or 11, further comprising a decomposition step V in which a formate dehydrogenase functions as a catalyst.

13. The method for decomposing a polyol according to Claim 10, wherein, in the decomposition step I, decomposition of the polyol proceeds according to reaction formula (1) below:
[Chem. 1] **R-CHOH-CHO → R-CHOH-COOH**
(wherein R is a chain or cyclic compound).

14. The method for decomposing a polyol according to Claim 10, wherein, in the decomposition step II, decomposition of the polyol proceeds by at least one of reactions according to reaction formulae (2) and (3) below:
[Chem. 2] **R-CHOH-COOH → R-CO-COOH**
(wherein R is a chain or cyclic compound).
[Chem. 3] **R-CO-CHO → R-CO-COOH**

15. The method for decomposing a polyol according to Claim 10, wherein, in the decomposition step III, decomposition of the polyol proceeds according to reaction formula (4) below:
[Chem. 4] **R-CO-COOH → R-CHO + CO₂**

16. The method for decomposing a polyol according to Claim 11, wherein, in the decomposition step IV, decomposition of the polyol proceeds by at least one of reactions according to reaction formulae (5) to (7) below:
[Chem. 5] **R-CHOH-CH₂OH → R-CO-CH₂OH**
[Chem. 6] **R-CHOH-CH₂OH → R-CHOH-CHO**
[Chem. 7] **R-CO-CH₂OH → R-CO-CHO**

17. The method for decomposing a polyol according to Claim 12, wherein, in the decomposition step V, decomposition of the polyol proceeds according to reaction formula (8) below:
[Chem. 8] **HCOOH → CO₂**

18. The method for decomposing a polyol according to Claim 10, wherein electrons generated in at least one step selected from the decomposition steps I to V reduce a desired oxidized coenzyme A to generate a reduced coenzyme B.

19. The method for decomposing a polyol according to Claim 18, wherein the oxidized coenzyme A is NAD⁺ and the reduced coenzyme B is NADH.

20. The method for decomposing a polyol according to Claim 10, comprising a step of oxidizing and/or reducing an electron mediator.
